# EUROPÄISCHE PATENTSCHRIFT

(11) **EP 3 990 748 B1**
(45) Veröffentlichungstag und Bekanntmachung des Hinweises auf die Patenterteilung: **23.08.2023**
(21) Anmeldenummer: 20735294.9
(22) Anmeldetag: 23.06.2020
(51) Int. Cl.: F01D 5/02, F01D 15/12, F01D 21/04

(54) **STRUKTURBAUGRUPPE FÜR EIN GASTURBINENTRIEBWERK**
STRUCTURAL ASSEMBLY FOR A GAS TURBINE ENGINE
MODULE STRUCTURAL CONÇU POUR UN MÉCANISME D'ENTRAÎNEMENT DE TURBINE À GAZ

(30) Priorität: 27.06.2019 DE 102019117414
(43) Veröffentlichungstag der Anmeldung: 04.05.2022
(73) Patentinhaber: Rolls-Royce Deutschland Ltd & Co KG, 15827 Blankenfelde-Mahlow (DE)
(72) Erfinder: BUCHHOLZ, Carsten, 15827 Blankenfelde-Mahlow (DE)
(86) Internationale Anmeldenummer: PCT/EP2020/067458
(87) Internationale Veröffentlichungsnummer: WO 2020/260258

(56) Entgegenhaltungen:
- DE-A1-102018 116 018
- US-A- 4 201 513
- US-A- 4 375 906

## Beschreibung

Die Erfindung betrifft eine Strukturbaugruppe für ein Gasturbinentriebwerk gemäß dem Oberbegriff des Patentanspruchs 1 sowie ein Gasturbinentriebwerk mit einer solchen Strukturbaugruppe. Die Strukturbaugruppe dient dem Schutz des Gasturbinentriebwerks im Falle des Verlustes einer Fanschaufel.

Der Verlust einer Fanschaufel eines Triebwerks beispielsweise durch Vogelschlag oder Materialermüdung führt zu extremen Lasten in Form einer hohen Unwucht im Triebwerk. Damit verbunden sind starke umlaufende Radiallasten in den Lagern der Fanwelle. Nach Verlust einer Fanschaufel wird das Triebwerk heruntergefahren.

Aus der US 4 375 906 A ist eine gattungsgemäße Strukturbaugruppe für ein Gasturbinentriebwerk bekannt, die eine mit einem Fan gekoppelte gegabelte Turbinenwelle aufweist, die eine radial äußere Fanwelle und eine radial innere Fanwelle umfasst. Im Normalbetrieb werden Lasten über die radial äußere Fanwelle übertragen. Im Falle des Verlustes einer Fanschaufel wird eine aus Abscherstiften bestehende Sicherung aktiviert, wodurch die Verbindung zwischen dem Fan und der radial äußeren Fanwelle getrennt wird, so dass Lasten nun über die radial innere Fanwelle übertragen werden.

Aus der US 6 109 022 A ist es bekannt, einem Orbitieren einer Fanwelle nach dem Verlust einer Fanschaufel durch radial wirkende elastische Elemente entgegenzuwirken.

Der vorliegenden Erfindung liegt die Aufgabe zu Grunde, eine Strukturbaugruppe für ein Gasturbinentriebwerk zur Verfügung zu stellen, die nach dem Verlust einer Fanschaufel die auftretenden Lasten über einen weiten Bereich der Drehzahl der Fanwelle reduziert.

Diese Aufgabe wird durch eine Strukturbaugruppe mit den Merkmalen des Patentanspruchs 1 und ein Gasturbinentriebwerk mit den Merkmalen des Patentanspruchs 14 gelöst. Ausgestaltungen der Erfindung sind in den abhängigen Ansprüchen angegeben.

Danach betrachtet die Erfindung eine Strukturbaugruppe für ein Gasturbinentriebwerk zum Schutz des Gasturbinentriebwerks im Falle des Verlustes einer Fanschaufel. Die Strukturbaugruppe umfasst einen Fan mit einer Fanscheibe und einer Vielzahl von Fanschaufeln und eine mit dem Fan gekoppelte gegabelte Fanwelle. Die gegabelte Fanwelle weist eine radial äußere Fanwelle und eine innerhalb der radial äußeren Fanwelle angeordnete radial innere Fanwelle auf. Die radial äußere Fanwelle ist dazu vorgesehen und ausgebildet ist, im Normalbetrieb des Fans ein Drehmoment auf den Fan zu übertragen, wobei die äußere Fanwelle über eine Sollbruchstelle mit dem Fan verbunden ist. Sie ist des Weiteren in einem Lager gelagert. Die radial innere Fanwelle ist fest mit dem Fan verbunden ist, d.h. ohne dass eine Sollbruchstelle vorhanden ist. Die radial innere Fanwelle und die radial äußere Fanwelle gehen stromabwärts des Lagers ineinander über und sind dementsprechend an einer Verbindungsstelle fest miteinander verbunden. Diese Verbindungsstelle stellt das Ende der Gabelung der Fanwelle dar. Die Sollbruchstelle ist derart ausgelegt, dass im Falle des Verlustes einer Fanschaufel aufgrund einer dann auftretenden exzentrischen Rotation des Fans die Sollbruchstelle bricht. In diesem Fall ist der Fan nur noch mit der radial inneren Fanwelle verbunden.

Es ist vorgesehen, dass die Strukturbaugruppe einen Kontaktmechanismus umfasst, der durch eine Abnahme der Drehzahl der Fanwellen aktiviert wird und der die radial innere Fanwelle mit der radial äußeren Fanwelle koppelt, wenn die Drehzahl der Fanwellen nach Bruch der Sollbruchstelle eine vorbestimmte Drehzahl unterschreitet. Dabei werden nach Kopplung der Fanwellen durch den Kontaktmechanismus radial wirkende Kräfte von der radial inneren Fanwelle auf die radial äußere Fanwelle übertragen.

Die vorliegende Erfindung beruht auf dem Gedanken, dass nach Abfallen der Drehzahl der radial inneren Fanwelle und der radial äußeren Fanwelle unter einen vorgegebenen Wert durch einen Kontaktmechanismus eine zuvor durch den Bruch der Sollbruchstelle aufgehobene Kopplung zwischen der radial inneren Fanwelle und der radial äußeren Fanwelle wiederhergestellt wird. Der Lastpfad zwischen der radial inneren Fanwelle und der radial äußeren Fanwelle wird somit nach dem Bruch der Sollbruchstelle wieder hergestellt, wenn die Drehzahl auf einen vorgegebenen Wert gesunken ist. Hierdurch wird erreicht, dass die aufgrund des Verlustes der Fanschaufel auf die radial innere Fanwelle wirkenden Kräfte direkt von der radial inneren Fanwelle auf die radial äußere Fanwelle übertragen und von der Lagerung der radial äußeren Fanwelle aufgenommen werden können. Damit kann insbesondere verhindert werden, dass die radial innere Fanwelle aufgrund der auf sie wirkenden Kräfte in Resonanzschwingungen gerät.

Die erfindungsgemäße Lösung ermöglicht damit über einen weiten Bereich von Drehzahlen der Fanwelle eine Reduzierung der durch den Verlust einer Fanschaufel verursachten Lasten. Hierbei sind zwei Phasen zu unterscheiden. Die erste Phase beginnt unmittelbar nach Bruch der Sollbruchstelle, wobei die Sollbruchstelle derart ausgebildet ist, dass sie aufgrund der Unwuchtkräfte, die nach Verlust einer Fanschaufel auftreten, bricht. Mit Bruch der Sollbruchstelle erfolgt keine Kraftübertragung mehr zwischen dem Fan und der radial äußeren Fanwelle. Sämtliche durch die Unwucht des Fans auftretenden Kräfte werden in die radial innere Fanwelle eingeleitet und von dieser über den Umweg der Verbindungsstelle zwischen der radial inneren Fanwelle und der radial äußeren Fanwelle in das Lager der radial äußeren Fanwelle (und eventuell ein weiteres, stromabwärts angeordneten des Lager) eingeleitet. Aufgrund einer geringeren Biegesteifigkeit der radial inneren Fanwelle werden die auftretenden Resonanzfrequenzen der radial inneren Fanwelle zu niedrigeren Frequenzen hin verschoben verglichen mit der Situation, dass die durch die Unwucht des Fans auftretenden Kräfte in die radial äußere Fanwelle übertragen würden. Bei den nach Auftreten eines Verlustes einer Fanschaufel zunächst noch hohen Drehzahlen der Fanschaufel werden die auftretenden Lasten somit reduziert.

Die erste Phase endet und die zweite Phase beginnt, wenn der Kontaktmechanismus aktiviert worden und die radial innere Fanwelle erneut mit der radial äußeren Fanwelle gekoppelt ist. Diese Kopplung, die eine Übertragung radialer Kräfte von der radial inneren Fanwelle auf die radial äußere Fanwelle ermöglicht, stellt den Lastpfad zwischen der radial inneren Fanwelle und der radial äußeren Fanwelle wieder her, so dass die auftretenden Kräfte direkt, ohne den Umweg über die Verbindungsstelle zwischen der radial inneren Fanwelle und der radial äußeren Fanwelle auf die radial äußere Fanwelle und deren Lager übertragen werden. Dies erfolgt bevorzugt zu einem Zeitpunkt, zu dem die radial innere Fanwelle noch nicht in Resonanz geraten ist, so dass auch in der zweiten Phase, wenn die Drehzahl der Fanwelle einen vorgegebenen Wert unterschritten hat, die auftretenden Lasten vergleichsweise gering sind. Durch den Kontaktmechanismus wird somit gewissermaßen der ursprüngliche Zustand, d. h. der Zustand vor Bruch der Sollbruchstelle zwischen radial innerer Fanwelle und radial äußere Fanwelle wiederhergestellt, bevor die radial innere Fanwelle in Resonanz gerät.

Es wird darauf hingewiesen, dass die radial innere Fanwelle und die radial äußere Fanwelle aufgrund ihrer Verbindung stets mit der gleichen Geschwindigkeit rotieren. Weiter wird darauf hingewiesen, dass nach Verlust einer Fanschaufel das Gasturbinentriebwerk herunterfährt, die Drehzahl der Fanwelle somit kontinuierlich abnimmt.

Die Aktivierung des Kontaktmechanismus bewirkt automatisch auch eine Zentrierung der radial inneren Fanwelle gegenüber der radial äußeren Fanwelle. Denn mit Aktivierung des Kontaktmechanismus werden radial wirkende Kräfte der radial inneren Fanwelle auf die radial äußere Fanwelle und dessen Lager übertragen. Schwingungen der radial inneren Fanwelle werden unterdrückt.

Eine Ausgestaltung der Erfindung sieht vor, dass der Kontaktmechanismus mehrere in Umfangsrichtung beabstandete, innenseitig mit der radial äußeren Fanwelle verbundene Kontaktelemente aufweist, die im Normalbetrieb des Fans im Wesentlichen axial ausgerichtet sind und die sich mit abnehmender Drehzahl der Fanwellen (und damit einer abnehmenden, auf die Kontaktelemente wirkenden Zentrifugalkraft) zunehmend stärker radial nach innen ausrichten, wobei die Kontaktelemente derart ausgebildet sind, dass sie unterhalb der vorbestimmten Drehzahl in Kontakt mit der radial inneren Fanwelle treten. Diese Ausgestaltung stellt einen passiv, allein durch einen Abfall der Drehzahl aktivierten Kontaktmechanismus bereit, der Kontaktelemente aufweist, deren Ausrichtung abhängig von der Drehzahl ist.

Eine Ausgestaltung hierzu sieht vor, dass die Kontaktelemente als innenseitig an ihrem einen Ende mit der radial äußeren Fanwelle verbundene federbelastete längliche Elemente ausgebildet sind, die eine radial nach innen gerichtete Federkraft erfahren, die bestrebt ist, sie radial auszurichten, wobei die federbelasteten länglichen Elemente bei abnehmender Drehzahl sich radial nach innen bewegen und bei Unterschreiten der vorbestimmten Drehzahl in Kontakt mit der radial inneren Fanwelle treten. An den federbelasteten länglichen Elementen greift somit zum einen eine Federkraft an, die bestrebt ist, die länglichen Elemente radial auszurichten, und greift zum anderen die Zentrifugalkraft an, die bestrebt ist, die länglichen Elemente axial auszurichten bzw. gegen die Innenwand der radial inneren Fanwelle zu drücken. Die Ausrichtung der länglichen Elemente hängt somit von der Drehzahl ab. Über die Festlegung der Federkraft kann eine Einstellung dahingehend erfolgen, dass bei Unterschreiten der vorbestimmten Drehzahl die länglichen Elemente in Kontakt mit der radial inneren Fanwelle treten und dabei eine Kopplung zwischen der radial inneren Fanwelle und der radial äußeren Fanwelle bereitstellen.

Der Kontaktmechanismus umfasst des Weiteren einen Befestigungsmechanismus, der die Kontaktelemente an der radial inneren Fanwelle hält, nachdem diese in Kontakt mit der radial inneren Fanwelle getreten sind. Die Kontaktelemente bzw. federbelasteten länglichen Elemente können dadurch ihre Funktion, radiale Kräfte von der radial inneren Fanwelle auf die radial äußere Fanwelle zu übertragen, zuverlässig erfüllen.

Eine Ausgestaltung hierzu sieht vor, dass die radial innere Fanwelle einen radialen Bund aufweist, der derart axial in Bezug auf die Kontaktelemente positioniert ist, dass die Kontaktelemente bei Unterschreiten der vorbestimmten Drehzahl an dem radialen Bund insofern einrasten, als sie nach Kontaktierung einer Seitenfläche des radialen Bunds in schräger Ausrichtung anschließend nicht mehr radial nach außen bewegbar sind, da dies zu einer Verkürzung bzw. Kompression des Materials der Kontaktelemente führen würde. Insbesondere kann vorgesehen sein, dass die Kontaktelemente eine Länge und drehzahlabhängige Ausrichtung derart aufweisen, dass sie sukzessive in Anlage an die Seitenfläche des radial inneren Bundes gelangen, wenn die Drehzahl der radial inneren Fanwelle nach Bruch der Sollbruchstelle abnimmt.

Die einzelnen Kontaktelemente werden gemäß dieser Ausgestaltung bei der nach Bruch der Sollbruchstelle und vor der vollständigen Aktivierung des Kontaktmechanismus erfolgenden radialen Auslenkung der radial inneren Fanwelle sukzessive eingefangen, indem die Kontaktelemente in einem Zustand größerer Auslenkung der radial inneren Fanwelle in Kontakt mit dem Bund treten und bei reduzierter Auslenkung der radial inneren Fanwelle diesen Kontakt zwingend behalten, da sie nun stärker radial ausgelenkt sind und ein Zurückbewegen des jeweiligen Kontaktelementes in eine horizontale Ausrichtung dessen Erstreckung in axialer Richtung vergrößern würde, was durch den Bund jedoch nicht möglich ist. Dabei ist vorgesehen, dass die Kontaktelemente aus einem im wesentlichen inkompressiblen Material bestehen, dass sich bei einer Druckeinwirkung in Längsrichtung nicht oder nicht wesentlich verkürzt. Dieses Kriterium erfüllen die meisten Festkörper, einschließlich Metalle und Stahl.

Eine Ausgestaltung der Erfindung sieht vor, dass die federbelasteten Elemente als vorgespannte Blattfedern ausgebildet sind, die an ihrem einen Ende innenseitig an der radial äußeren Fanwelle befestigt sind. Bei dieser Ausgestaltung ist die Bereitstellung eines Scharniers nicht erforderlich. Eine alternative Ausgestaltung sieht vor, dass die federbelasteten länglichen Elemente jeweils über ein Scharnier und eine Drehfeder an ihrem einen Ende innenseitig mit der radial äußeren Fanwelle verbunden sind. Grundsätzlich kommt es dabei jedoch nicht auf den genauen Aufbau der federbelasteten Elemente an, sondern nur auf deren Funktion, sich mit abnehmender Drehzahl bzw. mit abnehmender, auf sie wirkender Zentrifugalkraft zunehmend stärker in radialer Richtung zwischen der radial inneren Fanwelle und der radial äußeren Fanwelle auszurichten.

Wie bereits erwähnt, sieht eine Ausgestaltung der Erfindung vor, dass die radial innere Fanwelle eine geringere Biegesteifigkeit aufweist als die radial äußere Fanwelle. Hierdurch werden die auftretenden Resonanzfrequenzen der radial inneren Fanwelle zu niedrigeren Frequenzen hin verschoben.

Gemäß einer weiteren Ausgestaltung der Erfindung ist der Kontaktmechanismus derart ausgebildet, dass die radial innere Fanwelle mit der radial äußeren Fanwelle gekoppelt wird, bevor die radial innere Fanwelle in Resonanz gerät. Damit wird verhindert, dass durch eine Resonanz der radial inneren Fanwelle hohe Lasten auftreten.

Eine Ausführungsvariante kann vorsehen, dass die radial innere Fanwelle einen Auslenkungsbegrenzer aufweist, der im Fall eines Bruchs der Sollbruchstelle eine radiale Auslenkung der radial inneren Fanwelle gegenüber der radial äußeren Fanwelle begrenzt. Dabei ist zu beachten, dass die nach Verlust einer Fanschaufel auftretenden Radiallasten dazu führen, dass die radial innere Fanwelle u.a. eine exzentrische Umlaufbewegung ausführt, die auch als Orbitieren bezeichnet wird. Dabei handelt es sich nicht um die eigentliche Rotation der Fanwelle, sondern um eine der Rotation der Fanwelle überlagerte Bewegung. Durch den Auslenkungsbegrenzer werden zu hohe Amplituden eines solchen Orbitierens verhindert. Dabei kann der Auslenkungsbegrenzer in einer Ausgestaltung durch den bereits erwähnten, mit der radial inneren Fanwelle verbundenen Bund bereitgestellt werden.

Die Kontaktelemente sind beispielsweise äquidistant in Umfangsrichtung an der Innenseite der radial äußeren Fanwelle befestigt. Weiter sind sie beispielsweise an der gleichen axialen Position an der Innenseite der radial äußeren Fanwelle befestigt.

Gemäß einem weiteren Erfindungsaspekt betrifft die Erfindung ein Gasturbinentriebwerk mit einer Strukturbaugruppe nach Anspruch 1. Es kann vorgesehen sein, dass das Gasturbinentriebwerk aufweist:
- einen Triebwerkskern, der eine Turbine, einen Verdichter und eine die Turbine mit dem Verdichter verbindende, als Hohlwelle ausgebildete Turbinenwelle umfasst;
- einen Fan, der stromaufwärts des Triebwerkskerns positioniert ist; und
- ein Getriebe, das einen Eingang von der Turbinenwelle empfängt und Antrieb für den Fan zum Antreiben des Fans über eine Fanwelle mit einer niedrigeren Drehzahl als die Turbinenwelle abgibt,
- wobei der Fan und die Fanwelle durch eine erfindungsgemäße Strukturbaugruppe verbunden sind.

Eine Ausgestaltung hierzu kann vorsehen, dass
- die Turbine eine erste Turbine ist, der Verdichter ein erster Verdichter ist und die Turbinenwelle eine erste Turbinenwelle ist;
- der Triebwerkskern ferner eine zweite Turbine, einen zweiten Verdichter und eine zweite Turbinenwelle, die die zweite Turbine mit dem zweiten Verdichter verbindet, umfasst; und
- die zweite Turbine, der zweite Verdichter und die zweite Turbinenwelle dahingehend angeordnet sind, sich mit einer höheren Drehzahl als die erste Turbinenwelle zu drehen.

Es wird darauf hingewiesen, dass die vorliegende Erfindung bezogen auf ein zylindrisches Koordinatensystem beschrieben ist, das die Koordinaten x, r und ϕ aufweist. Dabei gibt x die axiale Richtung, r die radiale Richtung und ϕ den Winkel in Umfangsrichtung an. Die axiale Richtung ist dabei identisch mit der Maschinenachse eines Gasturbinentriebwerks, in dem die Strukturbaugruppe angeordnet ist. Von der x-Achse ausgehend zeigt die radiale Richtung radial nach außen. Begriffe wie "vor", "hinter", "vordere" und "hintere" beziehen sich auf die axiale Richtung bzw. die Strömungsrichtung im Triebwerk. Begriffe wie "äußere" oder "innere" beziehen sich auf die radiale Richtung.

Wie hier an anderer Stelle angeführt wird, kann sich die vorliegende Offenbarung auf ein Gasturbinentriebwerk beziehen. Solch ein Gasturbinentriebwerk kann einen Triebwerkskern umfassen, der eine Turbine, einen Brennraum, einen Verdichter und eine die Turbine mit dem Verdichter verbindende Kernwelle umfasst. Solch ein Gasturbinentriebwerk kann ein Gebläse (mit Gebläseschaufeln) umfassen, das stromaufwärts des Triebwerkskerns positioniert ist.

Anordnungen der vorliegenden Offenbarung können insbesondere, jedoch nicht ausschließlich, für Gebläse, die über ein Getriebe angetrieben werden, von Vorteil sein. Entsprechend kann das Gasturbinentriebwerk ein Getriebe umfassen, das einen Eingang von der Kernwelle empfängt und Antrieb für das Gebläse zum Antreiben des Gebläses mit einer niedrigeren Drehzahl als die Kernwelle abgibt. Der Eingang für das Getriebe kann direkt von der Kernwelle oder indirekt von der Kernwelle, beispielsweise über eine Stirnwelle und/oder ein Stirnzahnrad, erfolgen. Die Kernwelle kann mit der Turbine und dem Verdichter starr verbunden sein, so dass sich die Turbine und der Verdichter mit derselben Drehzahl drehen (wobei sich das Gebläse mit einer niedrigeren Drehzahl dreht).

Das Gasturbinentriebwerk, das hier beschrieben und/oder beansprucht wird, kann eine beliebige geeignete allgemeine Architektur aufweisen. Beispielsweise kann das Gasturbinentriebwerk eine beliebige gewünschte Anzahl an Wellen, die Turbinen und Verdichter verbinden, beispielsweise eine, zwei oder drei Wellen, aufweisen. Lediglich beispielhaft kann die mit der Kernwelle verbundene Turbine eine erste Turbine sein, der mit der Kernwelle verbundene Verdichter kann ein erster Verdichter sein und die Kernwelle kann eine erste Kernwelle sein. Der Triebwerkskern kann ferner eine zweite Turbine, einen zweiten Verdichter und eine zweite Kernwelle, die die zweite Turbine mit dem zweiten Verdichter verbindet, umfassen. Die zweite Turbine, der zweite Verdichter und die zweite Kernwelle können dahingehend angeordnet sein, sich mit einer höheren Drehzahl als die erste Kernwelle zu drehen.

Bei solch einer Anordnung kann der zweite Verdichter axial stromabwärts des ersten Verdichters positioniert sein. Der zweite Verdichter kann dahingehend angeordnet sein, Strömung von dem ersten Verdichter aufzunehmen (beispielsweise direkt aufzunehmen, beispielsweise über einen allgemein ringförmigen Kanal).

Das Getriebe kann dahingehend angeordnet sein, von der Kernwelle, die dazu konfiguriert ist, sich (beispielsweise im Gebrauch) mit der niedrigsten Drehzahl zu drehen, (beispielsweise die erste Kernwelle in dem obigen Beispiel) angetrieben zu werden. Beispielsweise kann das Getriebe dahingehend angeordnet sein, lediglich von der Kernwelle, die dazu konfiguriert ist, sich (beispielsweise im Gebrauch) mit der niedrigsten Drehzahl zu drehen, (beispielsweise nur von der ersten Kernwelle und nicht der zweiten Kernwelle bei dem obigen Beispiel) angetrieben zu werden. Alternativ dazu kann das Getriebe dahingehend angeordnet sein, von einer oder mehreren Wellen, beispielsweise der ersten und/oder der zweiten Welle in dem obigen Beispiel, angetrieben zu werden.

Bei einem Gasturbinentriebwerk, das hier beschrieben und/oder beansprucht wird, kann ein Brennraum axial stromabwärts des Gebläses und des Verdichters (der Verdichter) vorgesehen sein. Beispielsweise kann der Brennraum direkt stromabwärts des zweiten Verdichters (beispielsweise an dessen Ausgang) liegen, wenn ein zweiter Verdichter vorgesehen ist. Als ein weiteres Beispiel kann die Strömung am Ausgang des Verdichters dem Einlass der zweiten Turbine zugeführt werden, wenn eine zweite Turbine vorgesehen ist. Der Brennraum kann stromaufwärts der Turbine (der Turbinen) vorgesehen sein.

Der oder jeder Verdichter (beispielsweise der erste Verdichter und der zweite Verdichter gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln, bei denen es sich um variable Statorschaufeln (dahingehend, dass ihr Anstellwinkel variabel sein kann) handeln kann, umfassen. Die Reihe von Rotorschaufeln und die Reihe von Statorschaufeln können axial voneinander versetzt sein.

Die oder jede Turbine (beispielsweise die erste Turbine und die zweite Turbine gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln umfassen. Die Reihe von Rotorschaufeln und die Reihe von Statorschaufeln können axial voneinander versetzt sein.

Jede Gebläseschaufel kann mit einer radialen Spannweite definiert sein, die sich von einem Fuß (oder einer Nabe) an einer radial innenliegenden von Gas überströmten Stelle oder an einer Position einer Spannbreite von 0 % zu einer Spitze an einer Position einer Spannbreite von 100 % erstreckt. Das Verhältnis des Radius der Gebläseschaufel an der Nabe zu dem Radius der Gebläseschaufel an der Spitze kann weniger als (oder in der Größenordnung von): 0,4, 0,39, 0,38, 0,37, 0,36, 0,35, 0,34, 0,33, 0,32, 0,31, 0,3, 0,29, 0,28, 0,27, 0,26 oder 0,25 liegen. Das Verhältnis des Radius der Gebläseschaufel an der Nabe zu dem Radius der Gebläseschaufel an der Spitze kann in einem einschließenden Bereich liegen, der von zwei der Werte im vorhergehenden Satz begrenzt wird (d. h. die Werte können obere oder untere Grenzen bilden). Diese Verhältnisse können allgemeinhin als das Nabe-Spitze-Verhältnis bezeichnet werden. Der Radius an der Nabe und der Radius an der Spitze können beide an dem vorderen Randteil (oder dem axial am weitesten vorne liegenden Rand) der Schaufel gemessen werden. Das Nabe-Spitze-Verhältnis bezieht sich natürlich auf den von Gas überströmten Abschnitt der Gebläseschaufel, d. h. den Abschnitt, der sich radial außerhalb jeglicher Plattform befindet.

Der Radius des Gebläses kann zwischen der Mittellinie des Triebwerks und der Spitze der Gebläseschaufel an ihrem vorderen Rand gemessen werden. Der Durchmesser des Gebläses (der einfach das Doppelte des Radius des Gebläses sein kann) kann größer als (oder in der Größenordnung von): 250 cm (etwa 100 Inch), 260 cm, 270 cm (etwa 105 Inch), 280 cm (etwa 110 Inch), 290 cm (etwa 115 Inch), 300 cm (etwa 120 Inch), 310 cm, 320 cm (etwa 125 Inch), 330 cm (etwa 130 Inch), 340 cm (etwa 135 Inch), 350 cm, 360 cm (etwa 140 Inch), 370 cm (etwa 145 Inch), 380 cm (etwa 150 Inch) oder 390 cm (etwa 155 Inch) sein (liegen). Der Gebläsedurchmesser kann in einem einschließenden Bereich liegen, der von zwei der Werte im vorhergehenden Satz begrenzt wird (d. h. die Werte können obere oder untere Grenzen bilden).

Die Drehzahl des Gebläses kann im Gebrauch variieren. Allgemein ist die Drehzahl geringer für Gebläse mit einem größeren Durchmesser. Lediglich als ein nicht einschränkendes Beispiel kann die Drehzahl des Gebläses bei Konstantgeschwindigkeitsbedingungen weniger als 2500 U/min, beispielsweise weniger als 2300 U/min, betragen. Lediglich als ein weiteres nicht einschränkendes Beispiel kann auch die Drehzahl des Gebläses bei Konstantgeschwindigkeitsbedingungen für ein Triebwerk mit einem Gebläsedurchmesser im Bereich von 250 cm bis 300 cm (beispielsweise 250 cm bis 280 cm) im Bereich von 1700 U/min bis 2500 U/min, beispielsweise im Bereich von 1800 U/min bis 2300 U/min, beispielsweise im Bereich von 1900 U/min bis 2100 U/min, liegen. Lediglich als ein weiteres nicht einschränkendes Beispiel kann die Drehzahl des Gebläses bei Konstantgeschwindigkeitsbedingungen für ein Triebwerk mit einem Gebläsedurchmesser im Bereich von 320 cm bis 380 cm in dem Bereich von 1200 U/min bis 2000 U/min, beispielsweise in dem Bereich von 1300 U/min bis 1800 U/min, beispielsweise in dem Bereich von 1400 U/min bis 1600 U/min, liegen.

Im Gebrauch des Gasturbinentriebwerks dreht sich das Gebläse (mit zugehörigen Gebläseschaufeln) um eine Drehachse. Diese Drehung führt dazu, dass sich die Spitze der Gebläseschaufel mit einer Geschwindigkeit U_{Spitze} bewegt. Die von den Gebläseschaufeln an der Strömung verrichtete Arbeit resultiert in einem Anstieg der Enthalpie dH der Strömung. Eine Gebläsespitzenbelastung kann als dH/U_{Spitze}² definiert werden, wobei dH der Enthalpieanstieg (beispielsweise der durchschnittliche 1-D-Enthalpieanstieg) über das Gebläse hinweg ist und U_{Spitze} die (Translations-) Geschwindigkeit der Gebläsespitze, beispielsweise an dem vorderen Rand der Spitze, ist (die als Gebläsespitzenradius am vorderen Rand multipliziert mit der Winkelgeschwindigkeit definiert werden kann). Die Gebläsespitzenbelastung bei Konstantgeschwindigkeitsbedingungen kann mehr als (oder in der Größenordnung von): 0,3, 0,31, 0,32, 0,33, 0,34, 0,35, 0,36, 0,37, 0,38, 0,39 oder 0,4 betragen (liegen) (wobei alle Einheiten in diesem Abschnitt Jkg⁻¹K⁻¹/(ms⁻¹)² sind). Die Gebläsespitzenbelastung kann in einem einschließenden Bereich liegen, der von zwei der Werte im vorhergehenden Satz begrenzt wird (d. h. die Werte können obere oder untere Grenzen bilden).

Gasturbinentriebwerke gemäß der vorliegenden Offenbarung können ein beliebiges gewünschtes Bypassverhältnis aufweisen, wobei das Bypassverhältnis als das Verhältnis des Massendurchsatzes der Strömung durch den Bypasskanal zu dem Massendurchsatz der Strömung durch den Kern bei Konstantgeschwindigkeitsbedingungen definiert wird. Bei einigen Anordnungen kann das Bypassverhältnis mehr als (in der Größenordnung von): 10, 10,5, 11, 11,5, 12, 12,5, 13, 13,5, 14, 14,5, 15, 15,5, 16, 16,5 oder 17 betragen (liegen). Das Bypassverhältnis kann in einem einschließenden Bereich liegen, der von zwei der Werte im vorhergehenden Satz begrenzt wird (d. h. die Werte können obere oder untere Grenzen bilden). Der Bypasskanal kann im Wesentlichen ringförmig sein. Der Bypasskanal kann sich radial außerhalb des Triebwerkskerns befinden. Die radial äußere Fläche des Bypasskanals kann durch eine Triebwerksgondel und/oder ein Gebläsegehäuse definiert werden.

Das Gesamtdruckverhältnis eines Gasturbinentriebwerks, das hier beschrieben und/oder beansprucht wird, kann als das Verhältnis des Staudrucks stromaufwärts des Gebläses zu dem Staudruck am Ausgang des Höchstdruckverdichters (vor dem Eingang in den Brennraum) definiert werden. Als ein nicht einschränkendes Beispiel kann das Gesamtdruckverhältnis eines Gasturbinentriebwerks, das hier beschrieben und/oder beansprucht wird, bei Konstantgeschwindigkeit mehr als (oder in der Größenordnung von): 35, 40, 45, 50, 55, 60, 65, 70, 75 betragen (liegen). Das Gesamtdruckverhältnis kann in einem einschließenden Bereich liegen, der von zwei der Werte im vorhergehenden Satz begrenzt wird (d. h. die Werte können obere oder untere Grenzen bilden).

Der spezifische Schub eines Triebwerks kann als der Nettoschub des Triebwerks dividiert durch den Gesamtmassenstrom durch das Triebwerk hindurch definiert werden. Bei Konstantgeschwindigkeitsbedingungen kann der spezifische Schub eines Triebwerks, das hier beschrieben und/oder beansprucht wird, weniger als (oder in der Größenordnung von): 110 Nkg⁻¹s, 105 Nkg⁻¹s, 100 Nkg⁻¹s, 95 Nkg⁻¹s, 90 Nkg⁻¹s, 85 Nkg⁻¹s oder 80 Nkg⁻¹s betragen (liegen). Der spezifische Schub kann in einem einschließenden Bereich liegen, der von zwei der Werte im vorhergehenden Satz begrenzt wird (d. h. die Werte können obere oder untere Grenzen bilden). Solche Triebwerke können im Vergleich zu herkömmlichen Gasturbinentriebwerken besonders effizient sein.

Ein Gasturbinentriebwerk, das hier beschrieben und/oder beansprucht wird, kann einen beliebigen gewünschten Höchstschub aufweisen. Lediglich als ein nicht einschränkendes Beispiel kann eine Gasturbine, die hier beschrieben und/oder beansprucht wird, zur Erzeugung eines Höchstschubs von mindestens (oder in der Größenordnung von): 160kN, 170kN, 180kN, 190kN, 200kN, 250kN, 300kN, 350kN, 400kN, 450kN, 500kN oder 550kN in der Lage sein. Der Höchstschub kann in einem einschließenden Bereich liegen, der von zwei der Werte im vorhergehenden Satz begrenzt wird (d. h. die Werte können obere oder untere Grenzen bilden). Der Schub, auf den oben Bezug genommen wird, kann der Nettohöchstschub bei standardmäßigen atmosphärischen Bedingungen auf Meereshöhe plus 15 Grad C (Umgebungsdruck 101,3 kPa, Temperatur 30 Grad C) bei statischem Triebwerk sein.

Im Gebrauch kann die Temperatur der Strömung am Eingang der Hochdruckturbine besonders hoch sein. Diese Temperatur, die als TET bezeichnet werden kann, kann an dem Ausgang zum Brennraum, beispielsweise unmittelbar stromaufwärts der ersten Turbinenschaufel, die wiederum als eine Düsenleitschaufel bezeichnet werden kann, gemessen werden. Bei Konstantgeschwindigkeit kann die TET mindestens (oder in der Größenordnung von): 1400K, 1450K, 1500K, 1550K, 1600K oder 1650K betragen (liegen). Die TET bei Konstantgeschwindigkeit kann in einem einschließenden Bereich liegen, der von zwei der Werte im vorhergehenden Satz begrenzt wird (d. h. die Werte können obere oder untere Grenzen bilden). Die maximale TET im Gebrauch des Triebwerks kann beispielsweise mindestens (oder in der Größenordnung von): 1700K, 1750K, 1800K, 1850K, 1900K, 1950K oder 2000K betragen (liegen). Die maximale TET kann in einem einschließenden Bereich liegen, der von zwei der Werte im vorhergehenden Satz begrenzt wird (d. h. die Werte können obere oder untere Grenzen bilden). Die maximale TET kann beispielsweise bei einer Bedingung von hohem Schub, beispielsweise bei einer MTO-Bedingung (MTO - Maximum Take-Off thrust - maximaler Startschub), auftreten.

Eine Gebläseschaufel und/oder ein Blattabschnitt einer Gebläseschaufel, die hier beschrieben und/oder beansprucht wird, kann aus einem beliebigen geeigneten Material oder einer Kombination aus Materialien hergestellt werden. Beispielsweise kann zumindest ein Teil der Gebläseschaufel und/oder des Blatts zumindest zum Teil aus einem Verbundstoff, beispielsweise einem Metallmatrix-Verbundstoff und/oder einem Verbundstoff mit organischer Matrix, wie z. B. Kohlefaser, hergestellt werden. Als ein weiteres Beispiel kann zumindest ein Teil der Gebläseschaufel und/oder des Blatts zumindest zum Teil aus einem Metall, wie z. B. einem auf Titan basierendem Metall oder einem auf Aluminium basierenden Material (wie z. B. einer Aluminium-Lithium-Legierung) oder einem auf Stahl basierenden Material hergestellt werden. Die Gebläseschaufel kann mindestens zwei Bereiche umfassen, die unter Verwendung verschiedener Materialien hergestellt werden. Beispielsweise kann die Gebläseschaufel einen vorderen Schutzrand aufweisen, der unter Verwendung eines Materials hergestellt wird, das dem Aufschlagen (beispielsweise von Vögeln, Eis oder anderem Material) besser widerstehen kann als der Rest der Schaufel. Solch ein vorderer Rand kann beispielsweise unter Verwendung von Titan oder einer auf Titan basierenden Legierung hergestellt werden. Somit kann die Gebläseschaufel lediglich als ein Beispiel einen auf Kohlefaser oder Aluminium basierenden Körper (wie z. B. eine Aluminium-Lithium-Legierung) mit einem vorderen Rand aus Titan aufweisen.

Ein Gebläse, das hier beschrieben und/oder beansprucht wird, kann einen mittleren Abschnitt umfassen, von dem sich die Gebläseschaufeln, beispielsweise in einer radialen Richtung, erstrecken können. Die Gebläseschaufeln können auf beliebige gewünschte Art und Weise an dem mittleren Abschnitt angebracht sein. Beispielsweise kann jede Gebläseschaufel eine Fixierungsvorrichtung umfassen, die mit einem entsprechenden Schlitz in der Nabe (oder Scheibe) in Eingriff gelangen kann. Lediglich als ein Beispiel kann solch eine Fixierungsvorrichtung in Form eines Schwalbenschwanzes vorliegen, der zur Fixierung der Gebläseschaufel an der Nabe/Scheibe in einen entsprechenden Schlitz in der Nabe/Scheibe eingesteckt und/oder damit in Eingriff gebracht werden kann. Als ein weiteres Beispiel können die Gebläseschaufeln integral mit einem mittleren Abschnitt ausgebildet sein. Solch eine Anordnung kann als eine Blisk oder ein Bling bezeichnet werden. Ein beliebiges geeignetes Verfahren kann zur Herstellung solch einer Blisk oder solch eines Bling verwendet werden. Beispielsweise kann zumindest ein Teil der Gebläseschaufeln aus einem Block maschinell herausgearbeitet werden und/oder mindestens ein Teil der Gebläseschaufeln kann durch Schweißen, wie z. B. lineares Reibschweißen, an der Nabe/Scheibe angebracht werden.

Die Gasturbinentriebwerke, die hier beschrieben und/oder beansprucht werden, können oder können nicht mit einer VAN (Variable Area Nozzle - Düse mit variablem Querschnitt) versehen sein. Solch eine Düse mit variablem Querschnitt kann eine Variation des Ausgangsquerschnitts des Bypasskanals im Gebrauch gestatten. Die allgemeinen Prinzipien der vorliegenden Offenbarung können auf Triebwerke mit oder ohne eine VAN zutreffen.

Das Gebläse einer Gasturbine, die hier beschrieben und/oder beansprucht wird, kann eine beliebige gewünschte Anzahl an Gebläseschaufeln, beispielsweise 16, 18, 20 oder 22 Gebläseschaufeln, aufweisen.

Gemäß der hier erfolgenden Verwendung können Konstantgeschwindigkeitsbedingungen Konstantgeschwindigkeitsbedingungen eines Luftfahrzeugs, an dem das Gasturbinentriebwerk angebracht ist, bedeuten. Solche Konstantgeschwindigkeitsbedingungen können herkömmlicherweise als die Bedingungen während des mittleren Teils des Flugs definiert werden, beispielsweise die Bedingungen, denen das Luftfahrzeug und/oder das Triebwerk zwischen (hinsichtlich Zeit und/oder Entfernung) dem Ende des Steigflugs und dem Beginn des Sinkflugs ausgesetzt wird bzw. werden.

Lediglich als ein Beispiel kann die Vorwärtsgeschwindigkeit bei der Konstantgeschwindigkeitsbedingung bei einem beliebigen Punkt im Bereich von Mach 0,7 bis 0,9, beispielsweise 0,75 bis 0,85, beispielsweise 0,76 bis 0,84, beispielsweise 0,77 bis 0,83, beispielsweise 0,78 bis 0,82, beispielsweise 0,79 bis 0,81, beispielsweise in der Größenordnung von Mach 0,8, in der Größenordnung von Mach 0,85 oder in dem Bereich von 0,8 bis 0,85 liegen. Eine beliebige Geschwindigkeit innerhalb dieser Bereiche kann die Konstantfahrtbedingung sein. Bei einigen Luftfahrzeugen können die Konstantfahrtbedingungen außerhalb dieser Bereiche, beispielsweise unter Mach 0,7 oder über Mach 0,9, liegen.

Lediglich als ein Beispiel können die Konstantgeschwindigkeitsbedingungen standardmäßigen atmosphärischen Bedingungen bei einer Höhe, die im Bereich von 10.000 m bis 15.000 m, beispielsweise im Bereich von 10.000 m bis 12.000 m, beispielsweise im Bereich von 10.400 m bis 11.600 m (etwa 38.000 Fuß) beispielsweise im Bereich von 10.500 m bis 11.500 m, beispielsweise im Bereich von 10.600 m bis 11.400 m, beispielsweise im Bereich von 10.700 m (etwa 35.000 Fuß) bis 11.300 m, beispielsweise im Bereich von 10.800 m bis 11.200 m, beispielsweise im Bereich von 10.900 m bis 11.100 m, beispielsweise in der Größenordnung von 11.000 m, liegt, entsprechen. Die Konstantgeschwindigkeitsbedingungen können standardmäßigen atmosphärischen Bedingungen bei einer beliebigen gegebenen Höhe in diesen Bereichen entsprechen.

Lediglich als ein Beispiel können die Konstantgeschwindigkeitsbedingungen Folgendem entsprechen: einer Vorwärts-Mach-Zahl von 0,8; einem Druck von 23.000 Pa und einer Temperatur von -55 Grad C.

So wie sie hier durchweg verwendet werden, können "Konstantgeschwindigkeit" oder "Konstantgeschwindigkeitsbedingungen" den aerodynamischen Auslegungspunkt bedeuten. Solch ein aerodynamischer Auslegungspunkt (oder ADP - Aerodynamic Design Point) kann den Bedingungen (darunter beispielsweise die Mach-Zahl, Umgebungsbedingungen und Schubanforderung), für die der Gebläsebetrieb ausgelegt ist, entsprechen. Dies kann beispielsweise die Bedingungen, bei denen das Gebläse (oder das Gasturbinentriebwerk) konstruktionsgemäß den optimalen Wirkungsgrad aufweist, bedeuten.

Im Gebrauch kann ein Gasturbinentriebwerk, das hier beschrieben und/oder beansprucht wird, bei den Konstantgeschwindigkeitsbedingungen, die hier an anderer Stelle definiert werden, betrieben werden. Solche Konstantgeschwindigkeitsbedingungen können von den Konstantgeschwindigkeitsbedingungen (beispielsweise den Bedingungen während des mittleren Teils des Fluges) eines Luftfahrzeugs, an dem mindestens ein (beispielsweise 2 oder 4) Gasturbinentriebwerk zur Bereitstellung von Schubkraft befestigt sein kann, bestimmt werden.

Für den Fachmann ist verständlich, dass ein Merkmal oder Parameter, das bzw. der in Bezug auf einen der obigen Aspekte beschrieben wird, bei einem beliebigen anderen Aspekt angewendet werden kann, sofern sie sich nicht gegenseitig ausschließen. Des Weiteren kann ein beliebiges Merkmal oder ein beliebiger Parameter, das bzw. der hier beschrieben wird, bei einem beliebigen Aspekt angewendet werden und/oder mit einem beliebigen anderen Merkmal oder Parameter, das bzw. der hier beschrieben wird, kombiniert werden, sofern sie sich nicht gegenseitig ausschließen.

Die Erfindung wird nachfolgend unter Bezugnahme auf die Figuren der Zeichnung anhand mehrerer Ausführungsbeispiele näher erläutert. Es zeigen:
- Figur 1: eine Seitenschnittansicht eines Gasturbinentriebwerks;
- Figur 2: eine Seitenschnittgroßansicht eines stromaufwärtigen Abschnitts eines Gasturbinentriebwerks;
- Figur 3: eine zum Teil weggeschnitte Ansicht eines Getriebes für ein Gasturbinentriebwerk;
- Figur 4: schematisch eine Strukturbaugruppe eines Gasturbinentriebwerks zum Schutz des Gasturbinentriebwerks im Falle des Verlustes einer Fanschaufel, wobei die Strukturbaugruppe eine gegabelte Fanwelle sowie einen Kontaktmechanismus aufweist, der bei Unterschreiten einer vorbestimmten Drehzahl die radial innere Fanwelle mit der radial äußeren Fanwelle koppelt;
- Figur 5: im Querschnitt und im Längsschnitt ein Ausführungsbeispiel einer gegabelten Fanwelle und eines Kontaktmechanismus einer Strukturbaugruppe gemäß Figur 4, wobei der Kontaktmechanismus eine Mehrzahl von federbelasteten länglichen Elementen aufweist, deren Ausrichtung von der Drehzahl abhängig ist, wobei die Figur 5 die federbelasteten länglichen Elemente in axialer Ausrichtung zeigt, die sich bei hoher Drehzahl einstellt;
- Figur 6: die Anordnung der Figur 5, wobei die federbelasteten länglichen Elemente stärker radial ausgerichtet sind und in Kontakt mit der radial inneren Fanwelle treten, die Biegeschwingungen unterworfen ist;
- Figur 7: die Anordnung der Figur 5, wobei die federbelasteten länglichen Elemente maximal radial ausgerichtet sind und dabei in Kontakt mit der radial inneren Fanwelle stehen, wobei die federbelasteten länglichen Elemente die radial innere Fanwelle mit der radial äußeren Fanwelle koppeln;
- Figur 8: in einer Querschnittsansicht ein weiteres Ausführungsbeispiel eines Kontaktmechanismus, der eine Mehrzahl federbelasteten länglicher Elemente aufweist, wobei die federbelasteten länglichen Elemente über ein federbelastetes Gelenk an der Innenseite der radial äußeren Fanwelle befestigt sind;
- Figur 9: die im Falle des Verlustes einer Fanschaufel auftretenden Kräfte abhängig von der Drehzahl der Fanwelle für Szenarien gemäß dem Stand der Technik und der Erfindung;
- Figur 10: den Verlauf der Drehzahl einer Fanwelle in Abhängigkeit von der Zeit bei Auftreten eines Schaufelverlustes und einem sich daran anschließenden Herunterfahren des Gasturbinentriebwerks; und
- Figur 11: die nach dem Verlust einer Fanschaufel auftretenden radialen Kräfte in Abhängigkeit von der Zeit für Szenarien gemäß dem Stand der Technik und der Erfindung anhand einer Beispielsberechnung.

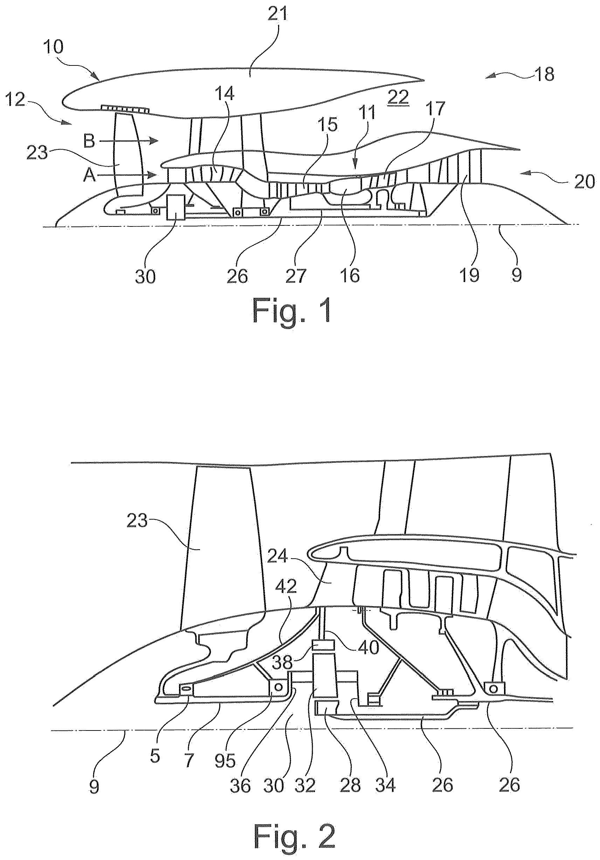

Figur 1 stellt ein Gasturbinentriebwerk 10 mit einer Hauptdrehachse 9 dar. Das Triebwerk 10 umfasst einen Lufteinlass 12 und ein Schubgebläse bzw. Fan 23, das zwei Luftströme erzeugt: einen Kernluftstrom A und einen Bypassluftstrom B. Das Gasturbinentriebwerk 10 umfasst einen Kern 11, der den Kernluftstrom A aufnimmt. Der Triebwerkskern 11 umfasst in Axialströmungsreihenfolge einen Niederdruckverdichter 14, einen Hochdruckverdichter 15, eine Verbrennungseinrichtung 16, eine Hochdruckturbine 17, eine Niederdruckturbine 19 und eine Kernschubdüse 20. Eine Triebwerksgondel 21 umgibt das Gasturbinentriebwerk 10 und definiert einen Bypasskanal 22 und eine Bypassschubdüse 18. Der Bypassluftstrom B strömt durch den Bypasskanal 22. Das Gebläse 23 ist über eine Welle 26 und ein Epizykloidengetriebe 30 an der Niederdruckturbine 19 angebracht und wird durch diese angetrieben.

Im Gebrauch wird der Kernluftstrom A durch den Niederdruckverdichter 14 beschleunigt und verdichtet und in den Hochdruckverdichter 15 geleitet, wo eine weitere Verdichtung erfolgt. Die aus dem Hochdruckverdichter 15 ausgestoßene verdichtete Luft wird in die Verbrennungseinrichtung 16 geleitet, wo sie mit Kraftstoff vermischt wird und das Gemisch verbrannt wird. Die resultierenden heißen Verbrennungsprodukte breiten sich dann durch die Hochdruck- und die Niederdruckturbine 17, 19 aus und treiben diese dadurch an, bevor sie zur Bereitstellung einer gewissen Schubkraft durch die Düse 20 ausgestoßen werden. Die Hochdruckturbine 17 treibt den Hochdruckverdichter 15 durch eine geeignete Verbindungswelle 27 an. Das Gebläse 23 stellt allgemein den Hauptteil der Schubkraft bereit. Das Epizykloidengetriebe 30 ist ein Untersetzungsgetriebe.

Eine beispielhafte Anordnung für ein Getriebegebläse-Gasturbinentriebwerk 10 wird in Figur 2 gezeigt. Die Niederdruckturbine 19 (siehe Figur 1) treibt die Welle 26 an, die mit einem Sonnenrad 28 der Epizykloidengetriebeanordnung 30 gekoppelt ist. Mehrere Planetenräder 32, die durch einen Planetenträger 34 miteinander gekoppelt sind, befinden sich von dem Sonnenrad 28 radial außen und kämmen damit. Der Planetenträger 34 beschränkt die Planetenräder 32 darauf, synchron um das Sonnenrad 28 zu kreisen, während er ermöglicht, dass sich jedes Planetenrad 32 um seine eigene Achse drehen kann. Der Planetenträger 34 ist über Gestänge 36 mit dem Gebläse 23 dahingehend gekoppelt, seine Drehung um die Triebwerksachse 9 anzutreiben. Ein Außenrad oder Hohlrad 38, das über Gestänge 40 mit einer stationären Stützstruktur 24 gekoppelt ist, befindet sich von den Planetenrädern 32 radial außen und kämmt damit.

Es wird angemerkt, dass die Begriffe "Niederdruckturbine" und "Niederdruckverdichter", so wie sie hier verwendet werden, so aufgefasst werden können, dass sie die Turbinenstufe mit dem niedrigsten Druck bzw. die Verdichterstufe mit dem niedrigsten Druck (d. h. dass sie nicht das Gebläse 23 umfassen) und/oder die Turbinen- und Verdichterstufe, die durch die Verbindungswelle 26 mit der niedrigsten Drehzahl in dem Triebwerk (d. h. dass sie nicht die Getriebeausgangswelle, die das Gebläse 23 antreibt, umfasst) miteinander verbunden sind, bedeuten. In einigen Schriften können die "Niederdruckturbine" und der "Niederdruckverdichter", auf die hier Bezug genommen wird, alternativ dazu als die "Mitteldruckturbine" und "Mitteldruckverdichter" bekannt sein. Bei der Verwendung derartiger alternativer Nomenklatur kann das Gebläse 23 als eine erste Verdichtungsstufe oder Verdichtungsstufe mit dem niedrigsten Druck bezeichnet werden.

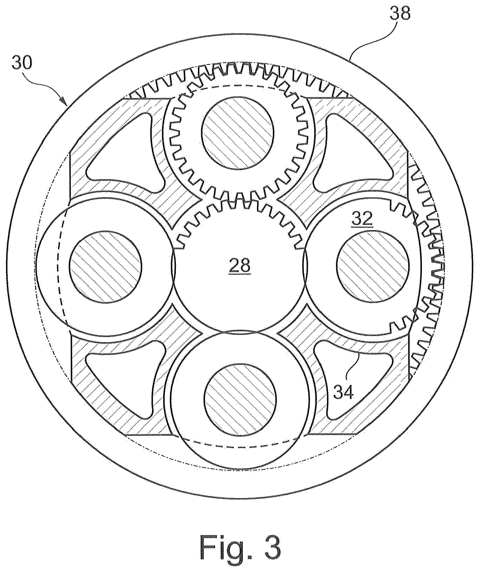

Das Epizykloidengetriebe 30 wird in Figur 3 beispielhaft genauer gezeigt. Das Sonnenrad 28, die Planetenräder 32 und das Hohlrad 38 umfassen jeweils Zähne um ihre Peripherie zum Kämmen mit den anderen Zahnrädern. Jedoch werden der Übersichtlichkeit halber lediglich beispielhafte Abschnitte der Zähne in Figur 3 dargestellt. Obgleich vier Planetenräder 32 dargestellt werden, liegt für den Fachmann auf der Hand, dass innerhalb des Schutzumfangs der beanspruchten Erfindung mehr oder weniger Planetenräder 32 vorgesehen sein können. Praktische Anwendungen eines Epizykloidengetriebes 30 umfassen allgemein mindestens drei Planetenräder 32.

Das in Figur 2 und 3 beispielhaft dargestellte Epizykloidengetriebe 30 ist ein Planetengetriebe, bei dem der Planetenträger 34 über Gestänge 36 mit einer Ausgangswelle gekoppelt ist, wobei das Hohlrad 38 festgelegt ist. Jedoch kann eine beliebige andere geeignete Art von Epizykloidengetriebe 30 verwendet werden. Als ein weiteres Beispiel kann das Epizykloidengetriebe 30 eine Sternanordnung sein, bei der der Planetenträger 34 festgelegt gehalten wird, wobei gestattet wird, dass sich das Hohlrad (oder Außenrad) 38 dreht. Bei solch einer Anordnung wird das Gebläse 23 von dem Hohlrad 38 angetrieben. Als ein weiteres alternatives Beispiel kann das Getriebe 30 ein Differenzialgetriebe sein, bei dem gestattet wird, dass sich sowohl das Hohlrad 38 als auch der Planetenträger 34 drehen.

Es versteht sich, dass die in Figur 2 und 3 gezeigte Anordnung lediglich beispielhaft ist und verschiedene Alternativen in dem Schutzumfang der vorliegenden Offenbarung liegen. Lediglich beispielhaft kann eine beliebige geeignete Anordnung zur Positionierung des Getriebes 30 in dem Triebwerk 10 und/oder zur Verbindung des Getriebes 30 mit dem Triebwerk 10 verwendet werden. Als ein weiteres Beispiel können die Verbindungen (z. B. die Gestänge 36, 40 in dem Beispiel von Figur 2) zwischen dem Getriebe 30 und anderen Teilen des Triebwerks 10 (wie z. B. der Eingangswelle 26, der Ausgangswelle und der festgelegten Struktur 24) einen gewissen Grad an Steifigkeit oder Flexibilität aufweisen. Als ein weiteres Beispiel kann eine beliebige geeignete Anordnung der Lager zwischen rotierenden und stationären Teilen des Triebwerks (beispielsweise zwischen der Eingangs- und der Ausgangswelle des Getriebes und den festgelegten Strukturen, wie z. B. dem Getriebegehäuse) verwendet werden, und die Offenbarung ist nicht auf die beispielhafte Anordnung von Figur 2 beschränkt. Beispielsweise ist für den Fachmann ohne Weiteres erkenntlich, dass sich die Anordnung von Ausgang und Stützgestängen und Lagerpositionierungen bei einer Sternanordnung (oben beschrieben) des Getriebes 30 in der Regel von jenen, die beispielhaft in Figur 2 gezeigt werden, unterscheiden würden.

Entsprechend dehnt sich die vorliegende Offenbarung auf ein Gasturbinentriebwerk mit einer beliebigen Anordnung der Getriebearten (beispielsweise sternförmig oder planetenartig), Stützstrukturen, Eingangs- und Ausgangswellenanordnung und Lagerpositionierungen aus.

Optional kann das Getriebe Neben- und/oder alternative Komponenten (z. B. den Mitteldruckverdichter und/oder einen Nachverdichter) antreiben.

Andere Gasturbinentriebwerke, bei denen die vorliegende Offenbarung Anwendung finden kann, können alternative Konfigurationen aufweisen. Beispielsweise können derartige Triebwerke eine alternative Anzahl an Verdichtern und/oder Turbinen und/oder eine alternative Anzahl an Verbindungswellen aufweisen. Als ein weiteres Beispiel weist das in Figur 1 gezeigte Gasturbinentriebwerk eine Teilungsstromdüse 20, 22 auf, was bedeutet, dass der Strom durch den Bypasskanal 22 seine eigene Düse aufweist, die von der Triebwerkskerndüse 20 separat und davon radial außen ist. Jedoch ist dies nicht einschränkend und ein beliebiger Aspekt der vorliegenden Offenbarung kann auch auf Triebwerke zutreffen, bei denen der Strom durch den Bypasskanal 22 und der Strom durch den Kern 11 vor (oder stromaufwärts) einer einzigen Düse, die als eine Mischstromdüse bezeichnet werden kann, vermischt oder kombiniert werden. Eine oder beide Düsen (ob Misch- oder Teilungsstrom) kann einen festgelegten oder variablen Bereich aufweisen. Obgleich sich das beschriebene Beispiel auf ein Turbogebläsetriebwerk bezieht, kann die Offenbarung beispielsweise bei einer beliebigen Art von Gasturbinentriebwerk, wie z. B. bei einem Open-Rotor- (bei dem die Gebläsestufe nicht von einer Triebwerksgondel umgeben wird) oder einem Turboprop-Triebwerk, angewendet werden. Bei einigen Anordnungen umfasst das Gasturbinentriebwerk 10 möglicherweise kein Getriebe 30.

Die Geometrie des Gasturbinentriebwerks 10 und Komponenten davon wird bzw. werden durch ein herkömmliches Achsensystem definiert, das eine axiale Richtung (die auf die Drehachse 9 ausgerichtet ist), eine radiale Richtung (in der Richtung von unten nach oben in Figur 1) und eine Umfangsrichtung (senkrecht zu der Ansicht in Figur 1) umfasst. Die axiale, die radiale und die Umfangsrichtung verlaufen senkrecht zueinander.

Die Figur 2 zeigt auch die abtriebsseitig mit dem Planetengetriebe 30 gekoppelte Fanwelle 7, die durch ein vorderes Lager 5 und ein hinteres Lager 95 gelagert ist. Die statischen Komponenten der Lager 5, 95 sind dabei mit einem Fangehäuse 42 verbunden, das Teil der stationären Stützstruktur 24 ist. Die stationäre Stützstruktur 24 ist mit einer Triebwerksaufhängung verbunden, über die das Gasturbinentriebwerk am Rumpf des Luftfahrzeugs oder an einer Tragfläche des Luftfahrzeugs befestigt ist.

Im Kontext der vorliegenden Erfindung sind die Kopplung des Fans 23 mit der Fanwelle 7 oder allgemein einer Turbinenwelle im Falle des Verlustes einer Fanschaufel sowie die Ausbildung der Fanwelle bzw. Turbinenwelle von Bedeutung.

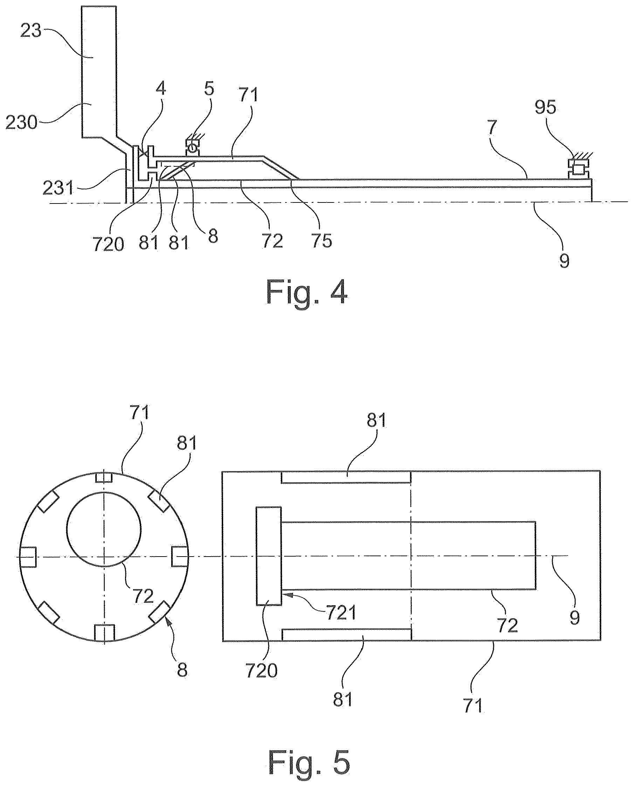

Die Figur 4 zeigt die Komponenten einer Strukturbaugruppe, die einen Fan 23 und eine mit dem Fan 23 gekoppelte gegabelte Fanwelle 7 umfasst. Bei der Fanwelle 7 handelt es sich beispielsweise um eine Fanwelle entsprechend der Figur 2, die durch ein Untersetzungsgetriebe angetrieben wird. Jedoch kann alternativ vorgesehen sein, dass die Fanwelle eine Turbinenwelle ist, die den Fan 23 direkt, d.h. ohne Zwischenschaltung eines Untersetzungsgetriebes antreibt. Die vorliegende Erfindung ist sowohl bei Gasturbinentriebwerken mit Untersetzungsgetriebe als auch bei Gasturbinentriebwerken ohne Untersetzungsgetriebe einsetzbar.

Im Rahmen der vorliegenden Beschreibung wird jede Welle, die den Fan antreibt, als Fanwelle bezeichnet, unabhängig davon, ob der Fan direkt über eine Turbinenwelle oder über ein Untersetzungsgetriebe angetrieben wird.

Gemäß der Figur 4 weist die gegabelte Fanwelle 7 eine radial äußere Fanwelle 71 und eine innerhalb der radial äußeren Fanwelle 71 angeordnete radial innere Fanwelle 72 auf. Die radial äußere Fanwelle 71 ist in einem Lager 5 gelagert, bei dem es sich beispielsweise um ein Axial- und Radiallager handelt. Die radial äußere Fanwelle 71 ist des Weiteren über eine Sollbruchstelle 4 mit dem Fan 23 verbunden. Der Fan 23 umfasst eine Fanscheibe 231 und eine Mehrzahl von Fanschaufeln 230, die mit der Fanscheibe 231 verbunden sind. Die radial äußere Fanwelle 71 ist über die Sollbruchstelle 4 mit der Fanscheibe 231 verbunden. Sofern im Rahmen dieser Beschreibung davon gesprochen wird, dass die radial äußere Fanwelle 71 und/oder die radial innere Fanwelle 72 mit dem Fan 23 verbunden ist, so handelt es sich hierbei jeweils um eine Verbindung mit der Fanscheibe 231.

Die radial innere Fanwelle 72 ist fest, d. h. ohne eine Sollbruchstelle mit dem Fan 23 verbunden. Die radial innere Fanwelle 72 und die radial äußere Fanwelle 71 gehen stromabwärts des Lagers 5 ineinander über und bilden dort eine Verbindungsstelle 75, an der sie fest miteinander verbunden sind. Stromabwärts der Verbindungsstelle 75 ist die Fanwelle 7 nicht mehr gegabelt. Ein weiteres Lager 95, bei dem es sich beispielsweise um ein Radiallager handelt, lagert zusammen mit dem Lager 5 die Fanwelle 7.

Die Strukturbaugruppe der Figur 4 umfasst des Weiteren einen Kontaktmechanismus 8, der passiv bei abnehmender Drehzahl der Fanwellen 71, 72 aktiviert wird und der dazu dient, die radial innere Fanwelle 72 und die radial äußere Fanwelle 71 nach einem Bruch der Sollbruchstelle 4 wieder miteinander zu koppeln, so dass radial wirkende Kräfte von der radial inneren Fanwelle 72 auf die radial äußere Fanwelle 71 übertragen und durch das Lager 5 aufgenommen werden können. Wie anhand der Figuren 5 bis 7 noch im Einzelnen erläutert wird, weist der Kontaktmechanismus 8 dabei federbelastete längliche Elemente 81 auf, deren Ausrichtung von der Drehzahl der Fanwellen 71, 72 abhängt und die nach Unterschreiten einer vorbestimmten Drehzahl in Kontakt mit der radial inneren Fanwelle 72 treten. Mit dem Kontaktmechanismus 8 wirkt dabei ein Bund 720 der radial inneren Fanwelle 72 zusammen.

Die Sollbruchstelle 4 ist derart ausgebildet, dass sie bei Kräften, wie sie im Falle des Verlustes einer Fanschaufel auftreten, bricht. Beispielsweise kann vorgesehen sein, dass die Sollbruchstelle Abscherstifte umfasst. Im Normalbetrieb des Fans (d.h. wenn dieser dreht und sämtliche Fanschaufeln intakt sind) wird der Fan 23 über die Fanwelle 7 und die radial äußere Fanwelle 71 angetrieben. Je nach Auslegung kann auch die radial innere Fanwelle 72 ein Drehmoment auf den Fan 23 übertragen. Nach Bruch der Sollbruchstelle 4 ist eine Kraftübertragung über die radial äußere Fanwelle 71 unterbrochen.

Umgekehrt werden Unwuchtkräfte, die der Fan 23 nach Verlust einer Fanschaufel aufgrund seiner Unwucht ausübt, nicht in die radial äußere Fanwelle 71, sondern ausschließlich in die radial innere Fanwelle 72 eingeleitet. Die Unwuchtkräfte werden nach einem Bruch der Sollbruchstelle 4 von der radial inneren Fanwelle 72 über die Verbindungsstelle 75 auf die radial äußere Fanwelle 71 übertragen und von dem Lager 5 und in geringerem Maße auch von dem Lager 95 aufgenommen. Dabei verhält es sich so, dass die radial innere Fanwelle 72 eine geringere Biegesteifigkeit aufweist als die radial äußere Fanwelle 71. Dies kann durch ein anderes Material und/oder durch eine andere Konstruktion bewirkt sein. Dementsprechend weist die radial innere Fanwelle 72 Resonanzfrequenzen auf, die niedriger liegen als die Resonanzfrequenzen, die die radial äußere Fanwelle 71 ohne eine Sollbruchstelle 4 und Entkopplung vom Fan 23 aufweisen würde.

Hierdurch wird erreicht, dass in einer ersten Phase nach Verlust einer Fanschaufel, wenn die Drehzahl der Fanwelle 7 und des Fans 23 sich bis zu einer Drehzahl reduziert, in der der Kontaktmechanismus greift, die radial auf die Lager 5, 95 wirkenden Kräfte reduziert werden. Denn durch die Verschiebung der Resonanzfrequenzen zu tieferen Frequenzen hin wird verhindert, dass eine Resonanz der radial inneren Fanwelle 71 in dem hohen Drehzahlbereich auftritt, der nach dem Verlust einer Fanschaufel zunächst noch vorliegt. Die Resonanzfrequenzen und die entsprechenden Amplituden der Schwingung können dabei durch die Geometrie der radial inneren Welle 72 und die axiale Position der Verbindungsstelle 75 eingestellt werden.

Der Bund 720 begrenzt in der ersten Phase nach Verlust einer Fanschaufel die maximale radiale Auslenkung der radial inneren Fanwelle 72 gegenüber der radial äußeren Fanwelle 71 und damit die Amplitude eines Orbitierens der radial inneren Fanwelle 72. Gegebenenfalls können hierzu weitere Bünde vorgesehen sein. Der Bund 720 wirkt insofern als Auslenkungsbegrenzer.

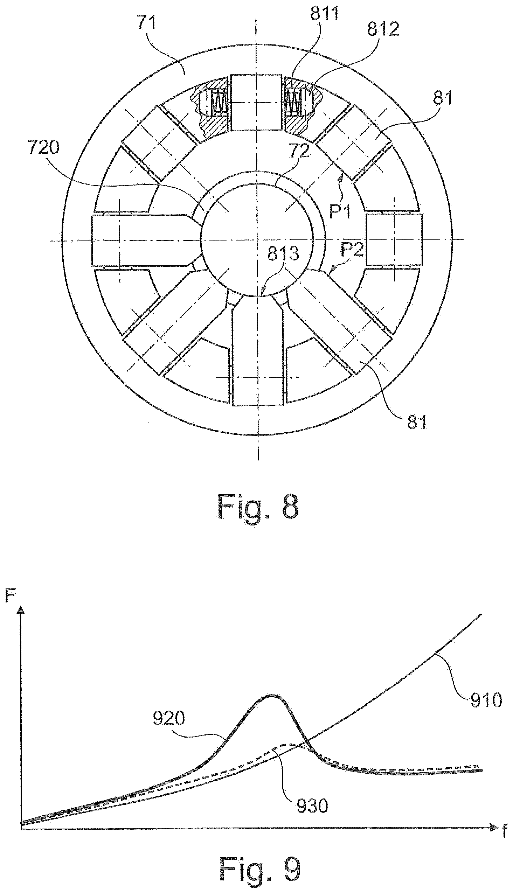

Die Wirkung der Kraftübertragung über die radial innere Fanwelle 72 nach Bruch der Sollbruchstelle 4 illustrieren die Kurven 910 und 920 der Figur 9. Dabei zeigt die Kurve 910 den Zustand ohne Sollbruchstelle, d. h. ohne Trennung des Fans 23 und der radial äußeren Fanwelle 71 im Falle des Verlustes einer Fanschaufel. Nach Verlust der Fanschaufel fährt das Gasturbinentriebwerk herunter, so dass die Drehzahl abnimmt. Die Kurven der Figur 9 sind somit von rechts nach links zu lesen. Aufgrund auftretender Resonanzen sind die auftretenden Kräfte und Lasten bei der Kurve 910 bei hohen Drehzahlen sehr groß und nehmen diese sukzessive zu niedrigeren Drehzahlen hin ab. Die Kurve 910 entspricht im Wesentlichen der Unwuchtkurve des Fans 23 und ist aufgrund der hohen, auftretenden Kräfte zu vermeiden. Durch Übertragung der Lasten auf die radial innere Fanwelle 72 nach Bruch der Sollbruchstelle werden die Resonanzfrequenzen zu tieferen Frequenzen hin verschoben, so dass im hohen Drehzahlbereich unmittelbar nach Verlust einer Fanschaufel die auftretenden Lasten deutlich reduziert sind.

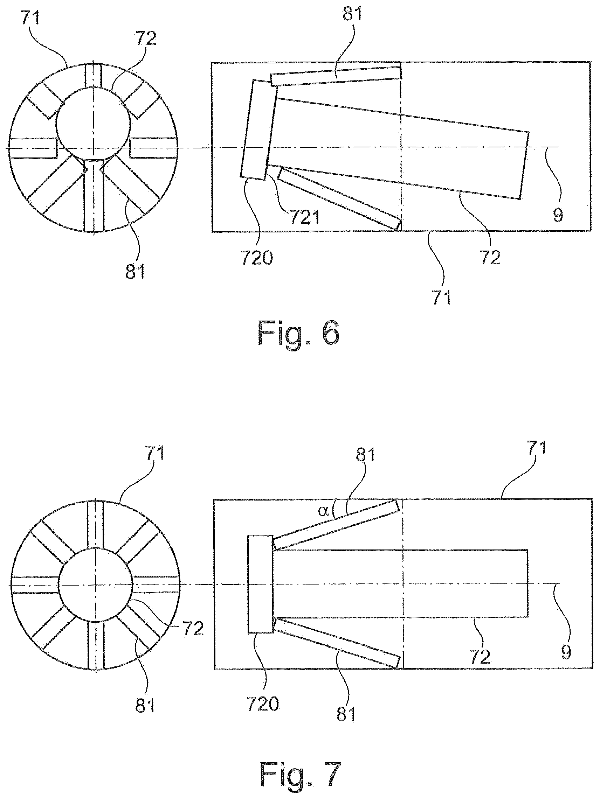

Bei Erreichen einer vordefinierten Drehzahl setzt der Kontaktmechanismus 8 ein, wie anhand der Figuren 5 und 7 beschrieben wird. Der Kontaktmechanismus 8 weist eine Mehrzahl von in Umfangsrichtung beabstandet angeordneter Kontaktelemente auf, die als federbelastete längliche Elemente 81 ausgebildet sind, die an ihrem einen Ende an der Innenseite der radial äußeren Fanwelle 71 befestigt sind. Eine auf die Kontaktelemente 81 wirkende Federkraft ist bestrebt, die Kontaktelemente 81 radial nach innen zu bewegen. Die Federkraft wird gemäß einem Ausführungsbeispiel dadurch bereitgestellt, dass die Kontaktelemente als Blattfedern ausgebildet sind. Gemäß einem anderen Ausführungsbeispiel sind die Kontaktelemente über ein federbelastetes Gelenk an der Innenseite der radial äußeren Fanwelle 71 befestigt, wie noch beispielhaft anhand der Figur 8 erläutert wird.

In der Figur 5 ist weiter der Bund 720 der radial inneren Fanwelle 72 zu erkennen, der in definierter axialer Position zu den Kontaktelemente 81 angeordnet ist.

Die Figur 5 zeigt die Anordnung in einem Zustand, in dem die Kontaktelemente 81 aufgrund einer hohen Drehzahl noch im Wesentlichen in axialer Richtung ausgerichtet sind. Aufgrund der Drehzahl wirkt der in radialer Richtung wirkenden Federkraft die auf die Elemente 81 wirkende Zentrifugalkraft entgegen und übertrifft diese.

In der linken Schnittdarstellung der Figur 5 ist weiter zu erkennen, dass die radial innere Fanwelle 72 aufgrund der durch die Unwucht des Fans eingeleiteten Kräfte Biegebewegungen ausübt und gegenüber einer mittigen, gegenüber der radial äußeren Fanwelle 71 zentrierten Position ausgelenkt ist. Die durch die radial innere Fanwelle 71 durchgeführten radialen Bewegungen können dabei komplex sein und eine Vielzahl von Biegeschwingungen an Eigenfrequenzen der radial inneren Fanwelle sowie ein Orbitieren umfassen. Der in der Figur 5 dargestellte Zustand kann als überkritisch bezeichnet werden.

Die Figur 6 zeigt den Zustand, wenn die Kontaktelemente 81 der Kontaktvorrichtung 8 in Kontakt mit der radial inneren Fanwelle 72 treten. Die Drehzahl ist dabei derart gesunken, dass die Kontaktelemente 81 sich zunehmend stärker in radialer Richtung ausrichten. Gleichzeitig erfährt die radial innere Fanwelle 71 aufgrund der auf sie wirkenden Kräfte Auslenkungen von der Mittelachse 9. Dabei treten die Kontaktelemente 81 in Kontakt mit der äußeren Umfangsfläche der radial inneren Fanwelle 72. Gleichartig kommen sie in axialer Richtung in Anlage an die eine Seitenfläche 721 des Bundes 720. Sukzessive rasten aufgrund der auf die Kontaktelemente 81 wirkenden Federkraft und der Hin- und Her Bewegung der radial inneren Fanwelle 71 sämtliche Kontaktelemente 81 an der radial inneren Fanwelle 72 und dem Bund 720 ein. Wenn sie dabei in einem Zustand größerer Auslenkung der radial inneren Welle 72 in Kontakt mit der radial inneren Welle 72 treten und in einem Zustand geringerer Auslenkung der radial inneren Welle 72 in Anlage an den Bund 720 gelangen, so sind sie fest an der radial inneren Welle 72 befestigt, da sie nun stärker radial ausgelenkt sind und ein Zurückbewegen des Kontaktelements 81 in Richtung der radial äußeren Welle 71 dessen Erstreckung in axialer Richtung vergrößern würde, was durch den Bund 720 jedoch verhindert wird.

Den insofern abgeschlossenen Zustand zeigt die Figur 7. Sämtliche Kontaktelemente 81 sind unter einem Winkel α gegenüber der axialen Richtung abgewinkelt und an ihren Enden in Kontakt mit der radial inneren Fanwelle 72, wobei die Enden an dem Bund 720 der radial inneren Fanwelle 72 anliegen. Hierdurch wird erreicht, dass die Kontaktelemente an der radial inneren Fanwelle 72 gehalten werden und nicht mehr radial nach außen bewegt werden können. Die länglichen federbelasteten Kontaktelemente 81 können auch als Klauen bezeichnet werden, die an der radial inneren Fanwelle 72 gewissermaßen einhaken. Denn ein radial nach außen Bewegen der Kontaktelemente 81 wäre aufgrund der Anlage an dem Bund 720 nur möglich, wenn die axiale Länge der Kontaktelemente 81, die gleich dem Cosinus des Winkels α ist, verkürzt würde. Dies ist aufgrund der Steifigkeit bzw. Inkompressibilität der Kontaktelemente 81 jedoch nicht möglich. Es liegt ein Verschlusseffekt vor.

Dementsprechend wird die radial innere Fanwelle 72 nach Aktivierung des Kontaktmechanismus 8 durch die Kontaktelemente 81 mittig zentriert und werden nunmehr radial auf die radial innere Fanwelle 72 wirkende Kräfte über die Kontaktelemente 81 direkt auf die radial äußere Fanwelle 72 übertragen. Damit ist der Lastpfad zwischen der radial inneren Fanwelle 72 und der radial äußeren Fanwelle 72, der durch Bruch der Sollbruchstelle 4 getrennt wurde, wieder hergestellt.

Der in der Figur 7 dargestellte Zustand kann als unterkritisch bezeichnet werden.

Mit Kopplung der radial inneren Fanwelle 72 mit der radial äußeren Fanwelle 71 durch den Kontaktmechanismus 8 endet die erste Phase und setzt eine zweite Phase ein, in der der Lastpfad zwischen der radial inneren Fanwelle 72 und der radial äußeren Fanwelle 71 wieder hergestellt ist. Lasten werden nun direkt von der radial inneren Fanwelle 72 auf die radial äußere Fanwelle 71 und das Lager 5 übertragen. Damit wird eine Resonanz der radial inneren Fanwelle 72 verhindert. Dies ist anhand der Kurve 930 der Figur 9 verdeutlicht. Danach setzt die Kopplung zwischen der radial inneren Fanwelle und der radial äußeren Fanwelle durch den Kontaktmechanismus 8 bei einer Drehzahl ein, bevor die radial innere Fanwelle 72 in Resonanz gerät. Ein verbleibender Resonanzanstieg fällt deutlich geringer aus, so dass die auftretenden Lasten und Kräfte F insgesamt sowohl gegenüber der Kurve 910 als auch der Kurve 920 deutlich reduziert sind. Damit sind die auftretenden Lasten über einen großen Drehzahlbereich deutlich reduziert.

Die Figur 8 zeigt ein Ausführungsbeispiel, bei dem die Kontaktelemente 81 gelenkig an der Innenseite der radial äußeren Fanwelle 72 befestigt sind. Hierzu weisen die Kontaktelemente 81 ein zylindrisches Gelenk 812 auf, das durch eine Drehfeder 811 vorgespannt ist, wobei die Drehfeder 811 bestrebt ist, die Kontaktelemente 81 radial auszurichten. Die Position P1 zeigt die Kontaktelemente 81 in axialer Ausrichtung, wenn sie aufgrund der gegenüber der Federkraft stärkeren Zentrifugalkraft horizontal ausgerichtet ist. Die Position P2 zeigt die Kontaktelement 81 in einer stärkeren radialen Auslenkung, wobei die Enden 813 der Kontaktelemente 81 an der radial inneren Fanwelle 72 und dem Bund 720 der radial inneren Fanwelle 72 anliegen.

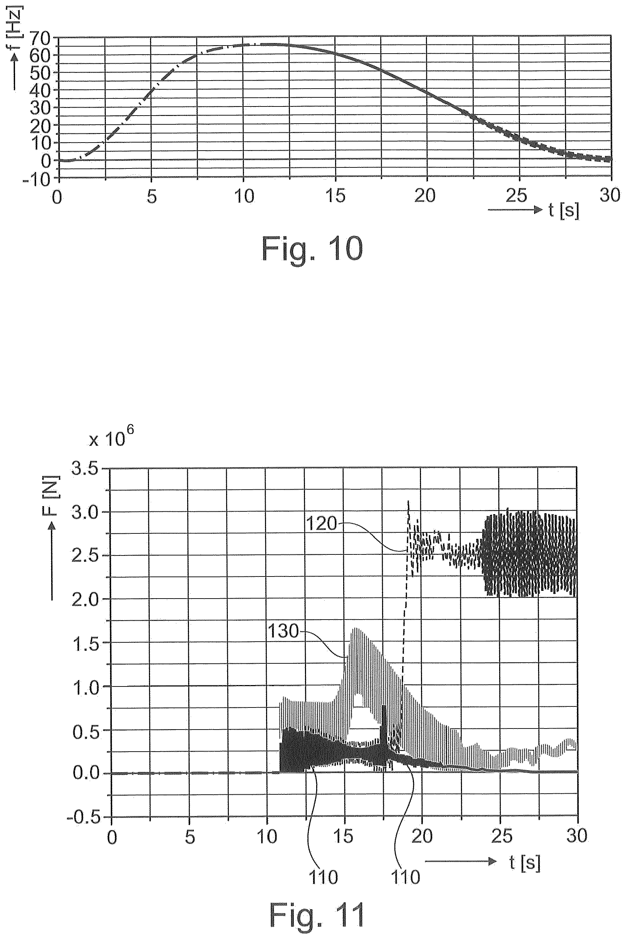

Die mit der Erfindung erzielten Vorteile werden weitergehend anhand der Figuren 10 und 11 erläutert. Hierbei handelt es sich um eine Computersimulation. Die Figur 10 zeigt den Verlauf der Drehzahl f des Fans bzw. der Fanwelle nach Verlust einer Fanschaufel in Abhängigkeit von der Zeit t. Der Verlust der Fanschaufel tritt nach 11 Sekunden auf. Daran anschließend reduziert sich die Drehzahl f sukzessive bis auf null.

Die Figur 11 zeigt die auf die radial innere Fanwelle 72 wirkenden radialen Kräfte bzw. Lasten ebenfalls in Abhängigkeit von der Zeit t anhand einer ersten Simulation für drei unterschiedliche Szenarien. Wiederum tritt nach 11 Sekunden der Verlust einer Fanschaufel auf. Der Kontaktmechanismus 8 greift nach 17 Sekunden.

Der Kurve 110 entspricht dabei das erfindungsgemäße Szenario. Die radialen Kräfte F, die nach Verlust der Fanschaufel schlagartig auftreten, sind vergleichsweise gering und bleiben auch vergleichsweise gering, wenn der Kontaktmechanismus nach 17 Sekunden greift. Dagegen gibt die Kurve 120 die auftretenden radialen Kräfte an, wenn der Lastpfad zwischen der radial inneren Fanwelle 72 und der radial äußeren Fanwelle 71 nicht wieder hergestellt wird und die radial innere Fanwelle 72 in Resonanz gerät. Bis zum Einsatz des Kontaktmechanismus verlaufen die Kurven 110, 120 im Wesentlichen gleich. Mit Auftreten der Resonanz, die durch den Kontaktmechanismus verhindert wird, treten dann bei der Kurve 120 deutlich höhere Kräfte auf. Die Kurve 130 gibt die Situation ohne eine Sollbruchstelle zwischen der radial äußeren Fanwelle und dem Fan wieder.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Auch wird hingewiesen, dass beliebige der beschriebenen Merkmale separat oder in Kombination mit beliebigen anderen Merkmalen eingesetzt werden können, sofern sie sich nicht gegenseitig ausschließen. Die Offenbarung dehnt sich auf alle Kombinationen und Unterkombinationen eines oder mehrerer Merkmale aus, die hier beschrieben werden und umfasst diese. Sofern Bereiche definiert sind, so umfassen diese sämtliche Werte innerhalb dieser Bereiche sowie sämtliche Teilbereiche, die in einen Bereich fallen.

## Patentansprüche

1. Strukturbaugruppe für ein Gasturbinentriebwerk (10), die aufweist:
- einen Fan (23), der eine Fanscheibe (231) und eine Vielzahl von Fanschaufeln (230) umfasst,
- eine mit dem Fan (23) gekoppelte gegabelte Fanwelle (7), die eine radial äußere Fanwelle (71) und eine innerhalb der radial äußeren Fanwelle (71) angeordnete radial innere Fanwelle (72) umfasst, wobei
- die radial äußere Fanwelle (71) dazu vorgesehen und ausgebildet ist, im Normalbetrieb des Fans (23) ein Drehmoment auf den Fan (23) zu übertragen, wobei die radial äußere Fanwelle (71) über eine Sollbruchstelle (4) mit dem Fan (23) verbunden ist,
- die radial äußere Fanwelle (71) in einem Lager (5) gelagert ist,
- die radial innere Fanwelle (72) fest mit dem Fan (23) verbunden ist,
- die radial innere Fanwelle (72) und die radial äußere Fanwelle (71) stromabwärts des Lagers (5) ineinander übergehen und an einer Verbindungsstelle (75) fest miteinander verbunden sind, und
- die Sollbruchstelle (4) derart ausgelegt ist, dass sie im Falle des Verlustes einer Fanschaufel (230) bricht,
**gekennzeichnet durch**
einen durch eine Abnahme der Drehzahl der Fanwellen (71, 72) aktivierten Kontaktmechanismus (8), der die radial innere Fanwelle (72) mit der radial äußeren Fanwelle (71) koppelt, wenn die Drehzahl der Fanwellen (71, 72) nach Bruch der Sollbruchstelle (4) eine vorbestimmte Drehzahl unterschreitet, wobei nach Kopplung der Fanwellen (71, 72) durch den Kontaktmechanismus (8) radial wirkende Kräfte von der radial inneren Fanwelle (72) auf die radial äußere Fanwelle (71) übertragen werden.

2. Strukturbaugruppe nach Anspruch 1, **dadurch gekennzeichnet, dass** der Kontaktmechanismus (8) mehrere in Umfangsrichtung beabstandete, innenseitig mit der radial äußeren Fanwelle (71) verbundene Kontaktelemente (81) aufweist, die im Normalbetrieb des Fans im Wesentlichen axial ausgerichtet sind und die sich nach Bruch der Sollbruchstelle (4) mit abnehmender Drehzahl der Fanwellen (71, 72) zunehmend stärker radial nach innen ausrichten, wobei die Kontaktelemente (81) derart ausgebildet sind, dass sie unterhalb der vorbestimmten Drehzahl in Kontakt mit der radial inneren Fanwelle (72) treten.

3. Strukturbaugruppe nach Anspruch 2, **dadurch gekennzeichnet, dass** die Kontaktelemente (81) als innenseitig an ihrem einen Ende mit der radial äußeren Fanwelle (71) verbundene federbelastete längliche Elemente ausgebildet sind, die eine radial nach innen gerichtete Federkraft erfahren, die bestrebt ist, sie radial auszurichten, wobei die Kontaktelemente (81) bei abnehmender Drehzahl sich radial nach innen bewegen und bei Unterschreiten der vorbestimmten Drehzahl in Kontakt mit der radial inneren Fanwelle (72) treten.

4. Strukturbaugruppe nach Anspruch 2 oder 3, **dadurch gekennzeichnet, dass** der Kontaktmechanismus (8) einen Befestigungsmechanismus umfasst, der die Kontaktelemente (81) an der radial inneren Fanwelle (72) hält, nachdem diese in Kontakt mit der radial inneren Fanwelle (72) getreten sind.

5. Strukturbaugruppe nach Anspruch 4, **dadurch gekennzeichnet, dass** die radial innere Fanwelle (72) einen radialen Bund (720) aufweist, der derart axial in Bezug auf die Kontaktelemente (81) positioniert ist, dass die Kontaktelemente (81) bei Unterschreiten der vorbestimmten Drehzahl an dem radialen Bund (720) insofern einrasten, als sie nach Kontaktierung einer Seitenfläche (721) des radialen Bunds in schräger Ausrichtung anschließend nicht mehr radial nach außen bewegbar sind, da dies zu einer Verkürzung der Kontaktelemente (81) führen würde.

6. Strukturbaugruppe nach Anspruch 5, **dadurch gekennzeichnet, dass** die Kontaktelemente (81) eine Länge und drehzahlabhängige Ausrichtung derart aufweisen, dass sie sukzessive in Anlage an die Seitenfläche (721) des radial inneren Bundes (720) gelangen, wenn die Drehzahl der radial inneren Fanwelle (72) nach Bruch der Sollbruchstelle (4) abnimmt.

7. Strukturbaugruppe nach einem der Ansprüche 2 bis 6, **dadurch gekennzeichnet, dass** die Kontaktelemente (81) als vorgespannte Blattfedern ausgebildet sind, die an ihrem einen Ende innenseitig an der radial äußeren Fanwelle (71) befestigt sind.

8. Strukturbaugruppe nach einem der Ansprüche 2 bis 6, **dadurch gekennzeichnet, dass** die Kontaktelemente (81) jeweils über ein federbelastetes Scharnier (812) oder Gelenk an ihrem einen Ende innenseitig mit der radial äußeren Fanwelle (71) verbunden sind.

9. Strukturbaugruppe nach einem der vorangehenden Ansprüche, **dadurch gekennzeichnet, dass** die radial innere Fanwelle (72) eine geringere Biegesteifigkeit aufweist als die radial äußere Fanwelle (71).

10. Strukturbaugruppe nach einem der vorangehenden Ansprüche, **dadurch gekennzeichnet, dass** der Kontaktmechanismus (8) derart ausgebildet ist, dass die radial innere Fanwelle (72) mit der radial äußeren Fanwelle (71) gekoppelt wird, bevor die radial innere Fanwelle (72) in Resonanz gerät.

11. Strukturbaugruppe nach einem der vorangehenden Ansprüche, **dadurch gekennzeichnet, dass** die radial innere Fanwelle (72) einen Auslenkungsbegrenzer (720) aufweist, der im Fall eines Bruchs der Sollbruchstelle (4) eine radiale Auslenkung der radial inneren Fanwelle (72) gegenüber der radial äußeren Fanwelle (71) begrenzt.

12. Strukturbaugruppe nach einem der vorangehenden Ansprüche, soweit rückbezogen auf Anspruch 2, **dadurch gekennzeichnet, dass** die Kontaktelemente (81) äquidistant in Umfangsrichtung an der Innenseite der radial äußeren Fanwelle (71) befestigt sind.

13. Strukturbaugruppe nach einem der vorangehenden Ansprüche, soweit rückbezogen auf Anspruch 2, **dadurch gekennzeichnet, dass** die Kontaktelemente (81) an der gleichen axialen Position an der Innenseite der radial äußeren Fanwelle (71) befestigt sind.

14. Gasturbinentriebwerk (10) mit einer Strukturbaugruppe nach Anspruch 1.

15. Gasturbinentriebwerk (10) nach Anspruch 14, das aufweist:
- einen Triebwerkskern (11), der eine Turbine (19), einen Verdichter (14) und eine die Turbine mit dem Verdichter verbindende, als Hohlwelle ausgebildete Turbinenwelle (26) umfasst;
- einen Fan (23), der stromaufwärts des Triebwerkskerns (11) positioniert ist; und
- ein Getriebe (30), das einen Eingang von der Turbinenwelle (26) empfängt und Antrieb für den Fan (23) zum Antreiben des Fans über eine Fanwelle (7) mit einer niedrigeren Drehzahl als die Turbinenwelle (26) abgibt,
- wobei der Fan (23) und die Fanwelle (7) durch eine Strukturbaugruppe gemäß Anspruch 1 verbunden sind.

## Claims

1. Structural assembly for a gas turbine engine (10), which has:
- a fan (23), which comprises a fan disk (231) and a plurality of fan blades (230),
- a forked fan shaft (7) coupled to the fan (23), which shaft comprises a radially outer fan shaft (71) and a radially inner fan shaft (72) arranged inside the radially outer fan shaft (71), wherein
- the radially outer fan shaft (71) is provided and designed to transmit a torque to the fan (23) in normal operation of the fan (23), wherein the radially outer fan shaft (71) is connected to the fan (23) via a predetermined breaking point (4),
- the radially outer fan shaft (71) is mounted in a bearing (5),
- the radially inner fan shaft (72) is fixedly connected to the fan (23),
- the radially inner fan shaft (72) and the radially outer fan shaft (71) merge into one another downstream of the bearing (5) and are fixedly connected to one another at a connection point (75), and
- the predetermined breaking point (4) is designed such that it breaks when a fan blade (230) is lost,
**characterised by**
a contact mechanism (8) which is activated by a decrease in the rotational speed of the fan shafts (71, 72) and which couples the radially inner fan shaft (72) to the radially outer fan shaft (71) when the rotational speed of the fan shafts (71, 72) falls below a predefined rotational speed after the predetermined breaking point (4) breaks, wherein, after the fan shafts (71, 72) have been coupled by the contact mechanism (8), forces acting radially are transmitted from the radially inner fan shaft (72) to the radially outer fan shaft (71).

2. Structural assembly according to claim 1, **characterised in that** the contact mechanism (8) has a plurality of contact elements (81) which are spaced apart in circumferential direction, connected to the inside of the radially outer fan shaft (71), aligned substantially axially in normal operation of the fan and aligned increasingly in a radially inward direction as the rotational speed of the fan shafts (71, 72) decreases after the predetermined breaking point (4) breaks, wherein the contact elements (81) are designed such that they enter into contact with the radially inner fan shaft (72) below the predefined rotational speed.

3. Structural assembly according to claim 2, **characterised in that** the contact elements (81) are designed as spring-loaded elongate elements which are connected at one end thereof to the inside of the radially outer fan shaft (71) and are subject to a radially inward spring force which tends to align them radially, wherein the contact elements (81) move radially inward as the rotational speed decreases, and enter into contact with the radially inner fan shaft (72) when the predefined rotational speed is undershot.

4. Structural assembly according to claim 2 oder 3, **characterised in that** the contact mechanism (8) comprises a fastening mechanism which holds the contact elements (81) on the radially inner fan shaft (72) after these have entered into contact with the radially inner fan shaft (72).

5. Structural assembly according to claim 4, **characterised in that** the radially inner fan shaft (72) has a radial collar (720) which is positioned axially in relation to the contact elements (81) such that, when the predefined rotational speed is undershot, the contact elements (81) latch in on the radial collar (720) inasmuch as, after making contact with a side face (721) of the radial collar in an oblique orientation, they can then no longer be moved radially outward since this would lead to shortening of the contact elements (81).

6. Structural assembly according to claim 5, **characterised in that** the contact elements (81) have a length and rotational speed-dependent alignment such that they come to bear successively on the side face (721) of the radially inner collar (720) when the rotational speed of the radially inner fan shaft (72) decreases after the predetermined breaking point (4) breaks.

7. Structural assembly according to one of claims 2 to 6, **characterised in that** the contact elements (81) are designed as prestressed leaf springs which are fastened at one end thereof to the inside of the radially outer fan shaft (71).

8. Structural assembly according to one of claims 2 to 6, **characterised in that** the contact elements (81) are each connected via a spring-loaded hinge (812) or joint at one end thereof to the inside of the radially outer fan shaft (71).

9. Structural assembly according to one of the preceding claims, **characterised in that** the radially inner fan shaft (72) has a lower bending stress than the radially outer fan shaft (71).

10. Structural assembly according to one of the preceding claims, **characterised in that** the contact mechanism (8) is designed such that the radially inner fan shaft (72) is coupled to the radially outer fan shaft (71) before the radially inner fan shaft (72) achieves resonance.

11. Structural assembly according to one of the preceding claims, **characterised in that** the radially inner fan shaft (72) has a deflection limiter (720) which limits radial deflection of the radially inner fan shaft (72) relative to the radially outer fan shaft (71) in the event of a break in the predetermined breaking point (4).

12. Structural assembly according to one of the preceding claims, where it refers back to claim 2, **characterised in that** the contact elements (81) are fastened equidistantly in circumferential direction to the inside of the radially outer fan shaft (71).

13. Structural assembly according to one of the preceding claims, where it refers back to claim 2, **characterised in that** the contact elements (81) are fastened to the inside of the radially outer fan shaft (71) at the same axial position.

14. Gas turbine engine (10) with a structural assembly according to claim 1.

15. Gas turbine engine (10) according to claim 14, which has:
- an engine core (11) which comprises a turbine (19), a compressor (14) and a turbine shaft (26) connecting the turbine to the compressor and formed as a hollow shaft;
- a fan (23) which is positioned upstream of the engine core (11); and
- a gear box (30) which receives an input from the turbine shaft (26) and outputs drive for the fan (23) via a fan shaft (7), to drive the fan at a lower rotational speed than the turbine shaft (26);
- wherein the fan (23) and the fan shaft (7) are connected by a structural assembly according to claim 1.

## Revendications

1. Module structural conçu pour un mécanisme d'entraînement de turbine à gaz (10), comportant :
- un ventilateur (23) comprenant un disque de ventilateur (231) et une pluralité d'aubes de ventilateur (230),
- un arbre de ventilateur (7) ramifié accouplé au ventilateur (23), comprenant un arbre de ventilateur situé radialement à l'extérieur (71) et un arbre de ventilateur situé radialement à l'intérieur (72) disposé à l'intérieur de l'arbre de ventilateur situé radialement à l'extérieur (71), dans lequel
- l'arbre de ventilateur situé radialement à l'extérieur (71) est prévu et conçu pour transmettre un régime au ventilateur (23) en fonctionnement normal du ventilateur (23), l'arbre de ventilateur situé radialement à l'extérieur (71) étant relié au ventilateur (23) par un point de rupture théorique (4),
- l'arbre de ventilateur situé radialement à l'extérieur (71) est logé dans un palier (5),
- l'arbre de ventilateur situé radialement à l'intérieur (72) est relié de manière fixe au ventilateur (23),
- l'arbre de ventilateur situé radialement à l'intérieur (72) et l'arbre de ventilateur situé radialement à l'extérieur (71) en aval du palier (5) se confondent l'un avec l'autre et sont reliés solidement l'un à l'autre en un point de jonction (75), et
- le point de rupture théorique (4) est conçu de telle sorte qu'il se rompt en cas de perte d'une aube de ventilateur (230),
**caractérisé par**
un mécanisme de contact (8) activé lorsque le régime des arbres de ventilateur (71, 72) diminue et accouple l'arbre de ventilateur situé radialement à l'intérieur (72) à l'arbre de ventilateur situé radialement à l'extérieur (71) lorsque le régime des arbres de ventilateur (71, 72) passe au-dessous d'un régime prédéfini après la rupture du point de rupture théorique (4), des forces agissant radialement étant transmises de l'arbre de ventilateur situé radialement à l'intérieur (72) à l'arbre de ventilateur situé radialement à l'extérieur (71) après l'accouplement des arbres de ventilateur (71, 72) par le mécanisme de contact (8).

2. Module structural selon la revendication 1, **caractérisé en ce que** le mécanisme de contact (8) comportant plusieurs éléments de contact (81) espacés dans la direction circonférentielle et reliés côté intérieur à l'arbre de ventilateur (71) situé radialement à l'extérieur, qui sont orientés essentiellement axialement lors du fonctionnement normal du ventilateur et qui, après la rupture du point de rupture théorique (4), s'orientent radialement de plus en plus fortement vers l'intérieur lorsque le régime des arbres de ventilateur (71, 72) diminue, les éléments de contact (81) étant conçus de telle sorte qu'ils entrent en contact avec l'arbre de ventilateur situé radialement à l'intérieur (72) en dessous du régime prédéfini.

3. Module structural selon la revendication 2, **caractérisé en ce que** les éléments de contact (81) sont réalisés sous la forme d'éléments allongés à ressort reliés à l'intérieur à l'une de leurs extrémités à l'arbre de ventilateur situé radialement à l'extérieur (71), qui subissent une force de ressort dirigée radialement vers l'intérieur qui tend à les orienter radialement, les éléments de contact (81) se déplaçant radialement vers l'intérieur lorsque le régime diminue et entrant en contact avec l'arbre de ventilateur situé radialement à l'intérieur (72) lorsque le régime est inférieur au régime prédéfini.

4. Module structural selon la revendication 2 ou 3, **caractérisé en ce que** le mécanisme de contact (8) comprend un mécanisme de fixation qui maintient les éléments de contact (81) sur l'arbre de ventilateur situé radialement à l'intérieur (72) après qu'ils soient entrés en contact avec l'arbre de ventilateur situé radialement à l'intérieur (72).

5. Module structural selon la revendication 4, **caractérisé en ce que** l'arbre de ventilateur situé radialement à l'intérieur (72) comportant une collerette radiale (720) qui est positionnée axialement par rapport aux éléments de contact (81) de telle sorte que, lorsque le régime prédéfini n'est pas atteint, les éléments de contact (81) s'enclenchent sur la collerette radiale (720) dans la mesure où, après être entrés en contact avec une surface latérale (721) de la collerette radiale dans une orientation oblique, ils ne peuvent ensuite plus se déplacer radialement vers l'extérieur, car cela conduirait à un raccourcissement des éléments de contact (81).

6. Module structural selon la revendication 5, **caractérisé en ce que** les éléments de contact (81) comportant une longueur et une orientation dépendant du régime de telle sorte qu'ils viennent successivement en appui contre la surface latérale (721) de la collerette située radialement à l'intérieure (720) lorsque le régime de l'arbre de ventilateur situé radialement à l'intérieur (72) diminue après rupture du point de rupture théorique (4).

7. Module structural selon l'une quelconque des revendications 2 à 6, **caractérisé en ce que** les éléments de contact (81) sont réalisés sous la forme de ressorts à lame précontraints qui sont fixés à l'une de leurs extrémités, côté intérieur, à l'arbre de ventilateur (71) situé radialement à l'extérieur.

8. Module structural selon l'une quelconque des revendications 2 à 6, **caractérisé en ce que** les éléments de contact (81) sont chacun reliés à l'une de leurs extrémités, côté intérieur, à l'arbre de ventilateur (71) situé radialement à l'extérieur, par l'intermédiaire d'une charnière (812) ou d'une articulation sollicitée par un ressort.

9. Module structural selon l'une quelconque des revendications précédentes, **caractérisé en ce que** l'arbre de ventilateur situé radialement à l'intérieur (72) comportant une rigidité à la flexion inférieure à celle de l'arbre de ventilateur situé radialement à l'extérieur (71).

10. Module structural selon l'une quelconque des revendications précédentes, **caractérisé en ce que** le mécanisme de contact (8) est conçu de telle sorte que l'arbre de ventilateur situé radialement à l'intérieur (72) est couplé à l'arbre de ventilateur situé radialement à l'extérieur (71) avant que l'arbre de ventilateur situé radialement à l'intérieur (72) n'entre en résonance.

11. Module structural selon l'une quelconque des revendications précédentes, **caractérisé en ce que** l'arbre de ventilateur situé radialement à l'intérieur (72) comportant un limiteur de déviation (720) qui, en cas de rupture du point de rupture théorique (4), limite une déviation radiale de l'arbre de ventilateur situé radialement à l'intérieur (72) par rapport à l'arbre de ventilateur situé radialement à l'extérieur (71).

12. Module structural selon l'une quelconque des revendications précédentes, en référence à la revendication 2, **caractérisé en ce que** les éléments de contact (81) sont fixés de manière équidistante dans la direction circonférentielle sur la face intérieure de l'arbre de ventilateur situé radialement à l'extérieur (71).

13. Module structural selon l'une quelconque des revendications précédentes, en référence à la revendication 2, **caractérisé en ce que** les éléments de contact (81) sont fixés à la même position axiale sur la face interne de l'arbre de ventilateur situé radialement à l'extérieur (71).

14. Mécanisme d'entraînement de turbine à gaz (10) comportant un module structural selon la revendication 1.

15. Mécanisme d'entraînement de turbine à gaz (10) selon la revendication 14, qui comportant :
- un noyau de mécanisme d'entraînement (11), qui comprend une turbine (19), un compresseur (14) et un arbre de turbine (26) reliant la turbine au compresseur et conçu comme un arbre creux ;
- un ventilateur (23) positionné en amont du noyau du mécanisme d'entraînement (11) ; et
- une transmission (30) recevant une entrée de l'arbre de turbine (26) et fournissant un entraînement au ventilateur (23) pour entraîner le ventilateur via un arbre de ventilateur (7) à un régime inférieur à celui de l'arbre de turbine (26),
- dans lequel le ventilateur (23) et l'arbre de ventilateur (7) sont reliés par un module structural selon la revendication 1.
